**Europäisches Patentamt**

**European Patent Office**

**Office européen des brevets**

(19)

(11) **EP 1 542 388 A1**

(12) **EUROPEAN PATENT APPLICATION**

(43) Date of publication:
**15.06.2005 Bulletin 2005/24**

(51) Int Cl.7: **H04L 1/06**, H04L 25/00, H04L 1/00

(21) Application number: **04256754.5**

(22) Date of filing: **02.11.2004**

| | |
|---|---|
| (84) Designated Contracting States: **AT BE BG CH CY CZ DE DK EE ES FI FR GB GR HU IE IS IT LI LU MC NL PL PT RO SE SI SK TR** Designated Extension States: **AL HR LT LV MK YU** | (72) Inventor: **Yee, Mong Suan Bristol BS1 4ND (GB)** |
| (30) Priority: **02.12.2003 GB 0327929** | (74) Representative: **Chisholm, Geoffrey David Marks & Clerk 90 Long Acre London WC2E 9RA (GB)** |
| (71) Applicant: **Kabushiki Kaisha Toshiba Tokyo 105-8001 (JP)** | |

(54) **Improved communications apparatus and methods**

(57)     This invention relates to apparatus, methods and computer program code for transmission and reception in communication systems in which a receiver receives signals from a plurality of transmit antennas associated with a single transmitter. In particular this is related to MIMO (multiple input multiple output) and MISO (multiple input single output) channel based wireless systems. The present invention provides a method of transmitting a data sequence in a wireless communications system comprising: transmitting said data sequence from a first antenna; interleaving the data sequence; transmitting at least a part of the interleaved sequence from a second antenna spaced apart from the first antenna, the part of the interleaved sequence transmitted simultaneously with a part of the data sequence transmitted from the first antenna.

Figure 4

Printed by Jouve, 75001 PARIS (FR)

EP 1 542 388 A1

**Description**

Field of the Invention

This invention relates to apparatus, methods and computer program code for transmission and reception in communication systems in which a receiver receives signals from a plurality of transmit antennas associated with a single transmitter. In particular this is related to MIMO (multiple input multiple output) and MISO (multiple input single output) channel based wireless systems.

Background of the Invention

Wireless communications systems such as cellular and local area networks suffer from interference and limited bandwidth as a result of the utilisation of radio frequency (RF) signals as is well known. These problems are exacerbated in cluttered or scattering environments where multi-path propagation of signals exists in which multiple copies of a transmitted signal are received. These copies are displaced in time and typically suffer from different amounts of interference due to their different paths. They also interfere with each other making the task of recovering the wanted or transmitted signal difficult. Various techniques have been utilised to mitigate these problems, for example error correction coding, channel estimation and equalisation, as well as various data estimation algorithms such as maximum likelihood (ML) or maximum a priori (MAP) based decoders to correctly recover transmitted data.

Error correction coding helps enables a communication system to recover original data from a signal that has been corrupted. The Bit Error Rate (BER) is generally defined as the ratio of incorrectly received information bits to the total number of received information bits. Typically, the greater the expected BER of a particular communication link, for example due to a high scattering environment or low SNR at the receiver, a more powerful error correction coding is necessary to recover the original data.

In cases where the expected BER of a particular communication link is substantially higher than the acceptable BER, a concatenated set of error correcting codes may be applied to the data in order to lower the BER to acceptable levels. Concatenated error correction coding refers to sequences of coding in which at least two encoding steps are performed on a data stream. Concatenated coding may be performed in series, where encoded data is subjected to further encoding, or in parallel where the original data is subjected to different encoding schemes to perform intermediate codes which are then further processed and combined into a serial stream.

Parallel and serial concatenated codes are sometimes decoded using iterative decoding algorithms. One commonly employed method of iterative decoding utilizes a single decoder processor where the decoder output metrics are fed back to the input of the decoder processor. Decoding is performed in an iterative fashion until the desired number of iterations have been performed.

"Turbo codes" are an example of parallel concatenated coding and are used as a technique of error correction in practical digital communications. The essence of the decoding technique of turbo codes is to produce soft decision outputs, i.e. different numerical values which describe the different reliability levels of the decoded symbols, which can be fed back to the start of the decoding process to improve the reliabilities of the symbols. This is known as the iterative decoding technique. Turbo decoding has been shown to perform close to the theoretical limit (Shannon limit) of error correction performance after 18 iterations - see C. Beerou, A. Glavieux, and P. Thitimajshima, "Near Shannon Limit Error-Correcting Coding: Turbo Codes." In Proc. IEEE Int. Conf. Commun., Geneva, Switzerland, 1993, pp. 1064-1070.

A turbo encoder comprises a pair of parallel-concatenated convolutional encoders separated by an interleaver , where the interleaver plays a role to shuffle (interleave) its input sequence in a pre-determined order. It accepts an input binary {0,1} sequence and produces three types of encoded output for each symbol when the coding rate is 1/3.

A turbo decoder receives the encoded signals and uses all three types of signals when the coding rate is 1/3 to reproduce the original bit sequence of the turbo encoder input. Two MAP decoders, associated with the convolutional encoders respectively, perform the decoding calculations. In addition to an interleaver to mirror the interleaver of the encoding side, the turbo decoder also consists of a deinterleaver to reconstruct the correct arrangement of the bit sequence to be fed back from one MAP decoder to another. A MAP decoder uses the BCJR algorithm as is well known.

In practical data communication systems multipath within a channel results in intersymbol interference (ISI), which is often corrected with a combination of equalisation and forward error coding. For example a zero-forcing based linear equaliser effectively convolves the received data with an inverse of the channel impulse response to produce data estimates with ISI substantially removed. An optimal equaliser may employ maximum likelihood (ML) sequence estimation or maximum a priori estimation (MAP), for example using a Viterbi algorithm. Where data has been protected with a convolutional code a soft input Viterbi decoder may be employed, usually together with data interleaving to reduce the effects of burst errors. Such approaches provide optimal equalisation but become impractical as the symbol alphabet size and sequence length (or equivalent channel impulse response length) increases.

Turbo equalisation achieves results which are close to optimal, if there is sufficient diversity, but with substantially reduced complexity compared to non-iterative joint channel equalisation and decoding. Broadly speaking turbo equalisation refers to an iterative process in which soft (likelihood) information is exchanged between an equaliser and a decoder until a consensus is reached. The effect of the channel response on the data symbols is treated similarly to an error correction code and typically a soft output Viterbi algorithm (SOVA) is used for both.

Until recently considerable effort was put into designing systems so as to mitigate for the perceived detrimental effects of multipath propagation, especially prevalent in wireless LAN (local area network) and other mobile communications environments. The described work G.J. Foschini and M.J. Gans, "On limits of wireless communications in a fading environment when using multiple antennas" *Wireless Personal Communications* vol. 6, no.3, pp.311-335, 1998 has shown that by utilising multiple antenna architectures at both the transmitter and receiver (a so-called multiple-input multiple-output (MEMO) architecture) vastly increased channel capacities are possible. MIMO systems can be configured or spatially multiplexed transmission where the original data stream is divided into substreams and are simultaneously transmitted on the individual antennas, additional diversity is achieved using multiple receiving antennas.

Attention has also turned to the adoption of space-time coding techniques (in OFDM, space-frequency coding) for wideband channels. The basic idea here is that the data to be transmitted is transmitted from two or more antennas using different processing at each antenna. This provides diversity or redundancy of the transmitted data received at the receiver. For example the well known Alamouti algorithm processes incoming symbol sequence s0 s1 as s0 -s1* from one antenna and at the same respective times s1 s0* from another antenna. Thus the symbols are transmitted twice but using different encoding and from a different position in space (antenna) thus providing independent channels and thereby providing a receiver with the opportunity to combine the signals for increased diversity or recover one signal and not the other to provide redundancy.

The Alamouti algorithm is limited to two transmit antennas, however it does allow for a reasonably simple receiver structure. More complex space-time coding (STC) algorithms are available such as Trellis coding which allow use of a greater number of transmit antennas and hence increased diversity/redundancy, however this is at the expense of increased receiver structure complexity.

A particular problem arises in a communications link where a transmitter with more than one transmit antenna is employed since signals received from different transmit antennas interfere with one another. This results in so-called multi-stream interference (MSI) and causes decoding difficulties.

So far, STC are mainly designed for frequency-flat fading channels. For multi-carrier OFDM schemes, STC is employed across OFDM subcarriers where frequency-flat fading is assumed for each subcarrier. However, for single-carrier modulation schemes, where the symbol duration is smaller than the channel delay spread, it is important to design STC for the presence of frequency-selective multipath channels. Unlike flat fading channels, optimal design of STC for dispersive multipath channels is complex because signals from different antennas are mixed not only in space but also in time. In order to maintain decoding simplicity and take advantage of existing STC designs for flat fading channels, most existing works have pursued (suboptimal) two-step approaches. First, the intersymbol interference is mitigated by converting frequency-selective fading channels to flat fading ones, using multiple-input-single-output (for single receive antenna) or multiple-input-multiple-output (for multiple receive antenna) equalizer for example, and then design space-time coders and decoders for the resulting flat fading channels.

Thus, a problem with using transmit spatial diversity such as the Alamouti based STC for frequency selective multipath channels is that the intersymbol interference destroys the orthogonality applied to the transmitted symbols. The orthogonal STC allows maximum likelihood space-time decoding which requires only simple linear processing. With the orthogonality of the STC destroyed, a more complex decoding technique is required such as the two-step approaches mentioned above.

Time-reversal space-time block coding proposed by E. Lindskog and A. Paulraj, "A transmit diversity scheme for channels with intersymbol interference", Proceedings of IEEE International Conference on Communications, 18-22 June 2000, vol. 1, pp. 307 - 311, is an extension of the Alamouti STC scheme to frequency-selective channels, and provides a block-based Alamouti encoding to preserve the orthogonality of the space-time block code. The orthogonal structure of the time-reversal STC is at block level and not symbol level as in the Alamouti STC scheme for flat-fading. At the receiver, time-reversal and complex conjugation is performed for the space-time decoding. The orthogonality of the space-time block code enables decoupling of the spatially multiplexed transmitted symbols using low complexity match filtering. Therefore, instead of the more complex MISO or MIMO equaliser that provides joint detection of the signals transmitted from different antennas, single-input-single-output (for single receive antenna) or single-input-multiple-output (for multiple receive antenna) equalization is sufficient to handle the intersymbol interference after the block-based decoupling. The block-based time-reversal STC requires an insertion of known symbols, i.e. guard symbols, in the beginning and end of each space-time block transmission to handle the 'edge effects' due to intersymbol interference. The 'known symbols' are normally the training sequence that is required for channel estimation. Another requirement of the time-reversal STC is that the channel is required to be approximately stationary over a block of space-time coded symbols. Therefore the size of this block is a design parameter.

Naofal Al-Dhahir, "Single-Carrier Frequency-Domain Equalization for Space-Time-Coded Transmissions over Broadband Wireless Channels" IEEE International Symposium on Personal, Indoor and Mobile Radio Communications, vol. 1, 30 Sept - 3 Oct, 2001, pp. B-143 - B-146, proposed a frequency-domain equalization (FDE) assisted block-level STC where the Alamouti orthogonal structure is imposed in the frequency domain and over two consecutive transmission blocks. Here, instead of 'known symbols', cyclic prefix is inserted at the end of each space-time block transmission.

S. Zhou and G. B. Giannakis, "Single-Carrier Space-Time Block-Coded Transmission Over Frequency-Selective Fading Channels", IEEE Transactions on Information Theory, vol. 49, no. 1, Jan. 2003, pp. 164-179, generalized the design of STBC for single-carrier block transmission in the presence of frequency selective fading channels that subsume the time-reversal STBC (by E. Lindkog and A. Paulraj) and the FDE assisted STBC (by N. Al-Dhahir).

However, the time-reversal and FDE based space-time block code impose an overhead from the use of the guard interval or cyclic prefix. Also, while the design of the orthogonal space-time block codes extended to more than two transmit antenna (described in V. Tarokh, H. Jafarkhani and A. R. Calderbank, "Space-Time Block Codes from Orthogonal Designs", IEEE Transactions on Information Theory, vol. 45, no. 5, July 1999, pp. 1456-1467) achieves the full spatial diversity but does not provide the maximum transmission rate using complex constellation.

Other non-spatial diversity/redundancy techniques involve resending the data at a different time, especially where the channel is changing over time, and/or resending the data with different processing, such as different encoding or even interleaving a sequence of data such that its re-transmitted sequence is different. Examples of these techniques are described in ] "Linear Iterative Turbo-Equalization (LITE) for Dual Channels", Andrew Singer, Jill Nelson, Ralf Koetter, *Conference Record of the Thirty-Third Asilomar Conference on Signals, Systems and Computers,* Vol. 2, 1999, pp 1670-1674; and "Mismatched Decoding of Intersymbol Interference Using a Parallel Concatenated Scheme", Krishna Balachandran and John B. Anderson, *IEEE Journal on Selected Areas in Communications,* Vol. 16, No. 2, pp. 255-259, Feb. 1998.

These temporal diversity schemes may be implemented to be used only when required, for example in automatic repeat request (ARQ) error control systems. Examples of such techniques are described in "Iterative Packet Combining Schemes for Intersymbol Interference Channels", Dung N. Doan and Krishna R. Narayanan, *IEEE Transactions on Communications,* vol. 50, no. 4, Apr. 2002.

Summary of the Invention

The present invention provides a wireless communications system comprising a transmitter having two or more antennas and one or more respective interleavers. The transmitter receives a number of sequences of symbols to be transmitted in respective time slots, and is arranged to simultaneously transmit a said sequence and one or more interleaved said sequence from respective antennas. The system also comprises a receiver having one or more antennas and arranged to recover the transmitted sequence from the signals received from the plurality of transmit antennas.

For conventional space-time block codes (STBC) such as the Alamouti code, dispersive wideband channels destroy the orthogonality of the code. Therefore typical space-time code (STC) are susceptible to ISI introduced by multipath environments, as the channels used by the different transmitters become mixed. Whilst this can be overcome with more complex coding such as space-time trellis coding (STTC), this requires a complex decoder at the receiver.

Thus embodiments of the invention can exploit ISI and consider the ISI as the component encoder of the space time encoder. The interleaving provides another 'independent' version of the transmitted symbols and thus introduces diversity which benefits iterative receivers and provides iterative gain. By comparison the design of other STCs especially orthogonal STBC requires mitigation of ISI before space-time decoding.

Embodiments of the invention provides a simple robust space time coding scheme which can be implemented in a multipath channel, and which maintains only low complexity decoding. They also provide more robust spatial diversity (and/or redundancy) in a multipath or mixed channel matrix. If time-domain equalization is employed, it does not need the overhead of a guard symbol or a cyclic prefix for dispersive ISI channels, and so allows for an increased transmission rate.

The approach provides spatial diversity or redundancy whilst at the same time reduces the decoding complexity when compared with other more complex STC techniques such as trellis or block encoding. A relatively simple SISO equalizer can be used to substantially remove the ISI and MSI and at the same time combine the spatial and multipath diversity.

In a preferred embodiment Turbo coding scheme is effectively implemented by concatenating a channel encoder with the multipath space time coding approach. A turbo decoding approach can then be used as the data is interleaved and then effectively encoded in parallel across the MIMO channel by the different ISI in the channel between each transmit and receive antenna pair. This allows the use of relatively simple turbo decoding architectures to be implemented in the receiver, thus reducing its complexity compared with the receiver structures of comparably multipath robust STC based schemes such as STTC. For example a soft-in-soft-out (SISO) MMSE turbo-equaliser can be used. The equaliser largely mitigates the MSI and ISI. The complexity of the decoder is then linearly related to the number of antennas, and not exponentially as in the case of trellis decoders. Furthermore, more than two transmit antennas can be used whilst still maintaining low receiver complexity, unlike the Alamouti algorithm for example which has a limit of two transmit antennas.

In particular in one aspect there is provided a method of transmitting a data sequence in a wireless communication system according to claim 1.

In particular in one aspect there is provided a method of receiving a data sequence in a wireless communications system according to claim 10.

There are also provided corresponding apparatus.

The channel can be made to appear recursive to the receiver by employing a precoder to increase the gain of the iterative receiver, for example as disclosed in A. G. Lillie, A. R. Nix, J. McGeehan, "Performance and Design of a Reduced Complexity Iterative Equalizer for Precoded ISI Channel", IEEE VTC-Fall, Orlando, Florida, USA, 6-9 Oct. 2003.

The transmitter and channel matrix may be thought of as concatenated encoders, the channel providing parallel ISI encoding. Additional encoding may be concatenated at the transmitter to increase BER as required, with a corresponding decoder concatenated at the receiver. An iterative equaliser and decoder architecture is preferred to reduce complexity.

There is also provided a preferred soft equaliser for use with the embodiments and which comprises a soft-in-soft-out (SISO) equaliser for use in a receiver of a communications system employing a plurality of transmit antennas, the equaliser comprising: at least one received signal input for inputting a received signal; a plurality of likelihood value inputs, one for each transmit antenna, for inputting a plurality of decoded signal likelihood values from a SISO decoder; a processor configured to determine from said plurality of signal likelihood values an estimated mean and covariance value for a signal from each of said transmit antennas; and expected signal determiner coupled to said processor to determine an expected received signal value using said means values; a subtractor coupled to said received signal input to subtract said expected received signal value from said received signal to provide a compensated signal; a filter coupled to said subtractor to filter said compensated signal to provide a plurality of estimated transmitted signal values, one for each said transmit antenna; a filter coefficient determiner coupled to said processor to determine coefficients of said filter using said covariance values; and an output stage coupled to said filter to output a plurality of transmitted signal likelihood values, one for each said transmit antenna, for input to said SISO decoder.

Preferably further comprising an adjuster to adjust said expected received signal value by an amount dependent upon said estimated mean values.

Preferably further comprising a filter gain controller configured to control the gain of said filter dependent upon said estimated covariance values.

Preferably said filter comprises a linear or transversal filter.

Preferably said filter coefficient determiner is configured to determine said filter coefficients according to a mean square error cost function.

Preferably said filter coefficient determiner is configured to determine said filter coefficients responsive to covariance values of estimated transmitted signal values derived from said signal likelihood values from said SISO decoder.

Preferably the equaliser is configured to utilise substantially constant filter coefficients for equalising a block or packet of received data symbols.

Preferably said filter coefficient determiner is configured to operate in the frequency domain, said equaliser further comprising Fourier transform means prior to said filter and inverse Fourier transform means following said filter.

In another aspect the SISO MIMO turbo-equaliser is configured for use with a SISO decoder to equalise data from a multiple antenna transmitter, the equaliser comprising a multi-dimensional transversal filter having a plurality of soft inputs and providing a plurality of soft outputs, the equaliser being configured to receive a soft information from said SISO decoder and to use said soft information to adjust coefficients of said transversal filter to mitigate MSI and ISI.

Preferably this is further configured to adjust said transversal filter coefficients in accordance with a minimum mean square (MMSE) criterion.

Preferably said filter operates in the frequency domain, and said coefficients comprise frequency domain coefficients, the equaliser further comprising Fourier transform means preceding said filter and inverse Fourier transform means following said filter.

Alternatively said filter operates in the time domain and wherein said coefficients comprise coefficients which are substantially time invariant over a symbol packet comprising a plurality of received symbols.

There are also provided corresponding methods and computer programs.

There is also provided a method of equalising data in a receiver of a communications system with a plurality

$n_1$ of transmit antennas the method comprising: inputting a received signal vector $\mathbf{Z}_n$ comprising a block of received signal data at an index $n$;

inputting from a SISO decoder a set of bit likelihood values $L(c^i_{n,j})$, $i$ =1 to $n_{1,j}$ = 1 to m where $c^i_{n,j}$, denotes a portion of am m-bit codeword symbol at an index $n$; determining expectation $E(x^i_n)$ and covariance $\text{cov}(x^i_n, x^i_n)$ values for estimated transmitted signal values $x^i_n$ using the values $L(c^i_{n,j})$, where $x^i_n$ denotes an estimated value of a signal transmitted from a transmit antenna $i$ at an index $n$; determining an updated estimated transmitted signal value $\hat{x}^i_n$ at index $n$ for each transmit antenna $i$ using

$$\hat{x}^i_n = K^i_n \mathbf{f}^{i\,H}_n \left[ \mathbf{Z}_n - \left( E(\mathbf{Z}_n) - \mathbf{e}^i E(x^i_n) \right) \right]$$

where $E(Z_n) = \mathbf{H}E(X_n)$ and $\mathbf{H}$ is a channel impulse response matrix and $E(\mathbf{X}_n)$ is an expectation value of an estimated transmitted signal vector $\mathbf{X}_n$ at index n derived from values $E(x^i_n)$, where $\mathbf{e}^i$ is the ith column of a matrix $\mathbf{S}$ and

$$\mathbf{S} = \mathbf{H} \left[ \mathbf{0}_{n_I \times (N2+L-1)n_I} \quad \mathbf{I}_{n_I \times n_I} \quad \mathbf{0}_{n_I \times N1n_I} \right]^H$$

where matrix $\mathbf{I}_{ixi}$ is an $i \times i$ identitymatrix and $\mathbf{0}_{ixj}$ is a matrix in which each element is substantially zero, $\mathbf{f}^i_n$ is the ith column of a filter matrix $\mathbf{F}_n$ and $\mathbf{F}_n$ is derived from $\text{cov}(\mathbf{x}_n, \mathbf{x}_n)$ , and where $K^i_n$ is a scalar filter gain; and outputting equalised likelihood values $L_e(c^i_{n,j})$ derived from values $\hat{x}^i_n$

Preferably further comprising decoding said values $L_e(c^i_{n,j})$ to provide said values $L(c^i_{n,j})$.

Preferably comprising iteratively equalising and decoding to determine values for $L_e(c^i_{n,j})$ and $L(c^i_{n,j})$ until a determination criterion is reached.

Preferably $\mathbf{F}_n$ is derived from $[\mathbf{HR}_{xx}\mathbf{H}^H]^{-1}\mathbf{S}$ where $\mathbf{R}_{xx} = \text{cov}(\mathbf{x}_n,\mathbf{x}_n)$.

Brief Description of the Drawings

Embodiments will now be described in detail with reference to the following drawings, by way of example only and without intending to be limiting, in which:

Figure 1 shows a MIMO based wireless communications system;

Figure 2 shows a block diagram of a MIMO channel model;

Figure 3 shows a MIMO based wireless communications system in more detail;

Figure 4 shows a wireless communications system according to an embodiment;

Figure 5 shows a receiver architecture according to an embodiment;

Figure 6 shows a wireless communications system according to another embodiment;

Figure 7 shows a transmitter architecture incorporating puncturing according to a further embodiment;

Figure 8 shows a further transmitter architecture incorporating puncturing according to an embodiment;

Figure 8a shows further transmitter architecture according to another embodiment;

Figure 9a and 9b show respectively a transmitter and a receiver architecture according to another embodiment;

Figure 10 shows the comparative BER performances of embodiments together with known arrangements;

Figure 11 shows a flow diagram of a MMSE MIMO turbo equalisation procedure according to an embodiment;

Figure 12 shows a block diagram of a soft-in-soft-out filter-based MIMO equalizer according to an embodiment;

Figure 13 shows a MIMO communications system including a receiver employing the MIMO equaliser of Figure 12; and

Figure 14 shows a block diagram of a frequency domain soft-in-soft-out filter-based MIMO equalizer according to a further embodiment of the present invention.

Description of the Embodiments

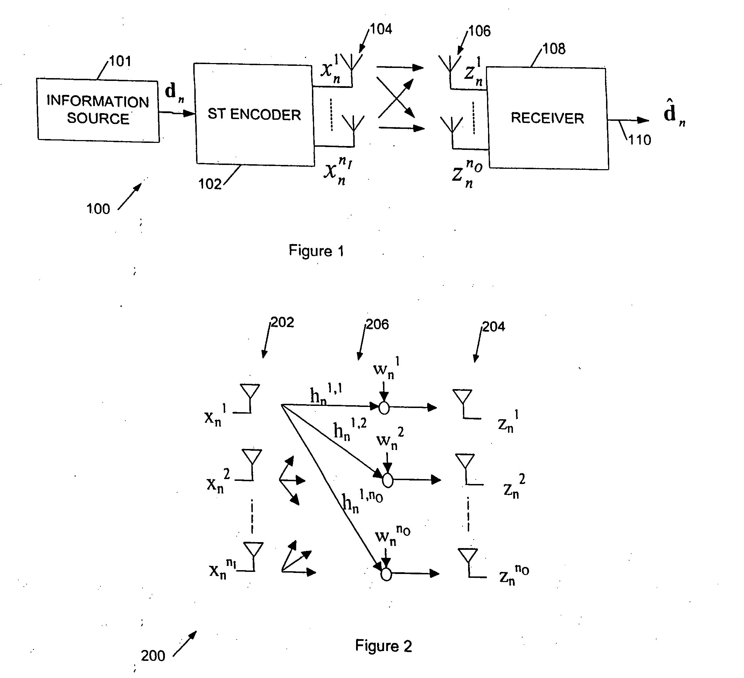

Figure 1 shows a MIMO communication system 100. An information source 101 provides an information symbol $\mathbf{d}_n$ at time $n$ to a space-time encoder 102 which encodes the symbol as $n_I$ coded symbols $x_n^1, x_n^2, \cdots, x_n^{n_1}$ each of which is transmitted simultaneously from one of transmit antennas 104. A plurality of $n_o$ receive antennas 106 receives respectively signals $z_n^1, z_n^2, \cdots, z_n^{n_o}$ which are input to receiver 108. The receiver 108 provides on output 110 an estimate $\hat{\mathbf{d}}_n$ of the encoded transmitted symbol $\mathbf{d}_n$. There is a plurality of channels between the transmit and receive antennas, for example all channels with two transmit antennas and two receive antennas. Periodic pilot sequences in the transmitted signal can be used to estimate the time varying responses of these channels.

The coded symbols $x_n^1, x_n^2, \cdots, x_n^{n_1}$ transmitted by the transmitter antennas 104 are typically encoded versions of the incoming data or information sequence. The encoding will be according to a predetermined algorithm such as the well known Alamouti, BLAST or a trellis codes for example. The receiver comprises an equaliser which attempts to correct for ISI in the time varying MIMO component channels, and a space-time decoder which receives the "equalised" signals in order to recover the original data sequence. A turbo based soft-in-soft-out equalisation scheme utilising an iterative approach between the equaliser and decoder is effective in reducing computational complexity whilst maintaining an acceptable BER link. However receiver complexity is still high for STC's such as the trellis approach used to provide robustness in a multipath MIMO channel. This complexity increases exponentially with the number of transmit antennas and so presents a practical limit to the number of transmitter antennas that can be used.

Figure 2 shows a block diagram 200 of a MIMO channel model. A multi-stream transmitter has first plurality $n_1$ of transmit antennas 202 and transmits respective symbols $x_n^1, X_n^2, ..., x_n^{n_1}$ at time n which comprise "inputs" to a matrix channel 206. A plurality $n_0$ of receive antennas 204 provides "outputs" from the $n_1 \times n_0$ MIMO matrix channel in the form of received signals $z_n^1, Z_n^2, ..., z_n^{n_0}$. There is a channel with an associated channel response $h_n^{i,j}$ between the ith transmit antenna and jth receive antenna. The received signal at each receive antenna also includes a noise component $w_n^j$.

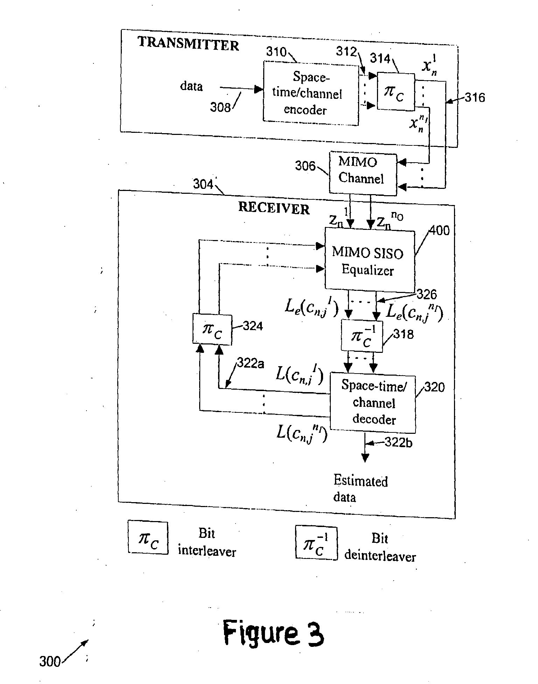

Figure 3 shows a MIMO communication system 300 in more detail, and including a MIMO transmitter 302 and a MIMO receiver 304 communicating via a MIMO channel 306. The receiver 304 incorporates a MIMO soft-in/soft-out (SISO) equaliser 400. The transmitter 302 has a data input 308 providing an input to a space-time and/or channel encoder 310. The encoder 310 provides a plurality of outputs 312 to an interleaver 314 which, in turn, provides signals to a plurality of rf output stages and thence to a corresponding plurality of transmit antennas.

The plurality of transmitted signals is output via MIMO channel 306, and provides a (different) plurality of inputs to receiver 304. The communication system employs a single transmitter to provide a plurality of transmit output streams, either for redundancy or increased bit rate. The transmissions from the plurality of transmit antennas may, for example, share the frequency or overlap in frequency and/or overlap in time. This is different to a communication system employing a plurality of users with frequency and/or time domain controlled access in which, generally speaking, it is preferred to assign different frequencies and/or time slots to different users.

A plurality of receive antennas coupled to a corresponding plurality of rf receiver front ends (not shown for clarity) provides a plurality of inputs to MIMO SISO MMSE equaliser 400. The soft output 326 from the equaliser 400 are deinterleaved by a deinterleaver 318 and then provided to a space-time/channel decoder 320. The decoder accepts a plurality of inputs, one for each signal stream from a transmit antenna, and provides a corresponding plurality of outputs 322a, b which are either provided to a bit interleaver 324 and returned to equaliser 400 for a further equalisation-decoding iteration or, if a termination criterion has been reached, output as estimated data. It will be appreciated that equaliser needs complete transmitted symbols from decoder 320, that is where, for example, error check bit such as parity bits have been included transmit symbols including these parity bits should be provided to the equaliser. A MIMO channel estimator (not shown) may receives a plurality of inputs from the rf receiver front end and a set of inputs from bit interleaver 324, and output an estimate of **H** to equaliser 400.

In an $n_1 \times n_0$ MIMO system the MIMO equalizer aims to provide an estimate of $n_1$ transmitted data symbols at every signalling instant. Data from the plurality of transmit antennas are transmitted at the same or overlapping times and using at the same or overlapping frequencies and thus MSI is introduced, as well as ISI from the dispersive wideband channel. In some systems the same or related data is transmitted from different transmit antennas in order to provide redundancy or diversity. In other systems different data streams are transmitted from each transmit antenna, for example to provide higher overall data rates.

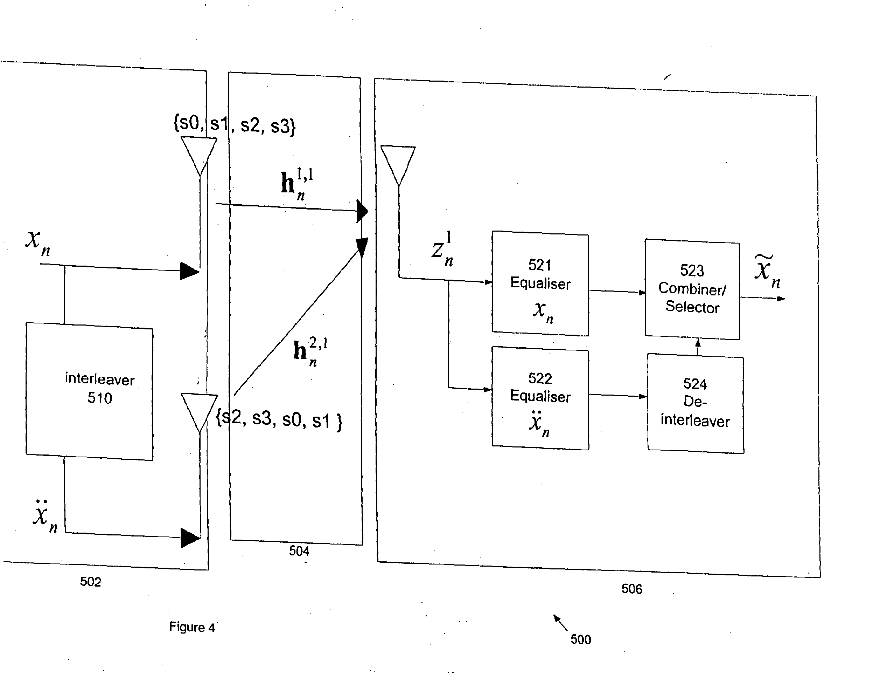

Figure 4 shows a block schematic of a wireless communications system 500 according to an embodiment, and comprises including a multiple antenna transmitter 502 and a single antenna receiver 506 communicating via a MISO channel 504. The transmitter 502 comprises two transmit antennas spaced apart, and an interleaver 510. The transmitter receives a symbol sequence $\{x_n\}$ comprising symbols {s0, s1, s2, s3} which is applied to the interleaver 510 to get an interleaved symbol sequence $\{x_n\}$ comprising symbols {s2, s3, s0, s1} for example. The symbol sequence $\{x_n\}$ and the interleaved symbol sequence $\{\ddot{x}_n\}$ are then simultaneously transmitted from the different transmit antennas.

Simultaneously here means that the sequence and the interleaved sequence are transmitted over the same time frame, and that symbols from each sequence are transmitted together in the same respective symbol time slots.

Any interleaving scheme can be applied, for example block or pseudo-random interleaving. Interleaving can be performed bit-based or symbol-based. Figure 4 shows the case where symbol-based interleaving is performed. The interleaver randomises the data sequence such that the information sequence and the interleaved sequence are uncorrelated and seem 'independent' especially if the interleaver length is sufficiently large. However, the scheme can still be deployed where not too many "same" symbols are transmitted at the same time.

There is no requirement for the antennas to be spaced apart to provide orthogonal or non-correlated channels, and therefore a relatively small spacing is acceptable which is advantageous in small portable devices such as mobile phones and laptop computers. This is because the information sequence and the interleaved sequence would be encoded by the same 'encoder' (the same channel response) and so have similar ISIS. There will still be diversity from the interleaver providing the interleaved sequence.

The symbol sequences $\{x_n\}$ are received from a modulator which is not shown for clarity. The sequences themselves can be encoded, for example by a channel encoder applying a convolutional code to a data stream prior to modulation.

The receiver 506 has a single receive antenna which receives a combined signal $z_n^1$ from the two transmit antennas through the MISO channel 504. Two equalisers 521 and 522 are coupled to the receive antenna, and are arranged to recover the signals transmitted from each of the transmit antennas ($\{x_n\}$ and $\{\ddot{x}_n\}$ respectively). These recovered or estimated signals can then be used to provide diversity by combining them in combiner/selector 523, firstly de-interleaving the interleaved signal $\{\ddot{x}_n\}$ using de-interleaver 524. Alternatively, redundancy is provided by selecting one of the signals over the other, again using the combiner/selector block 523. The recovered sequence $\{x_n\}$ can then be demodulated and if appropriate decoded.

Training sequences can be provided to give the channel impulse response from each transmit antenna for each respective equaliser.

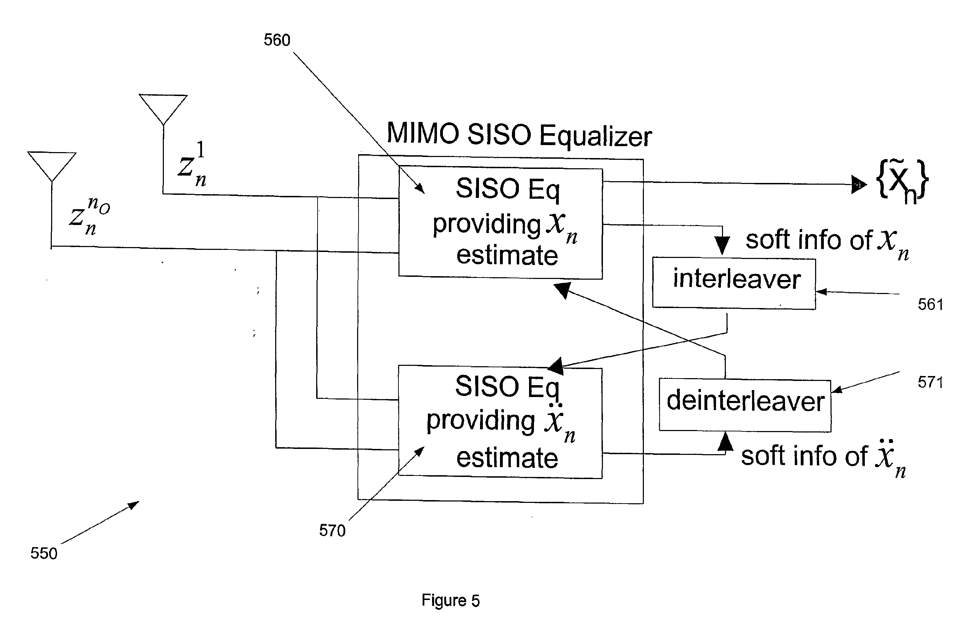

Preferably the transmitter 502 is coupled to a multiple ($n_0$) antenna receiver through a MIMO channel as shown in figure 2. A preferred receiver architecture 550 is shown in figure 5, and comprises two SISO equalisers 560 and 570, one for each transmitter antenna to provide estimates for the sequence $\{x_n\}$ and the interleaved sequence $\{\ddot{x}_n\}$ respectively. The soft output from each equaliser 560 and 570 provides an input for the next iteration of the other equaliser 560 and 570 respectively. These outputs are appropriately interleaved or de-interleaved by interleaver 561 and de-interleaver 571 respectively. A number of iterations are performed until a criterion is met at which point the output from the $\{x_n\}$ equaliser 560 is taken as the final estimate for the original sequence $\{x_n\}$. The criterion may be a predetermined level of likelihood for example, or a predetermined number of iterations.

The soft information of the interleaved data $\{\ddot{x}_n\}$ from the second antenna provides independent statistical information (in terms of LLR) of the directly transmitted data $\{x_n\}$, and this provides a better estimate of the transmitted data (either interleaved or not interleaved) on subsequent iterations.

A preferred MMSE SISO equaliser for use in the above described receiver 550 is described in more detail below. Other options include a SOVA equalizer, such as described in J. Hagenaur and P. Hoher, "A Viterbi algorithm with soft-decision outputs and its applications", Global Telecommunications Conference, 1989, and Exhibition. 'Communications Technology for the 1990s and Beyond'. GLOBECOM '89., IEEE, 27-30 Nov. 1989 Page(s): 1680 -1686 vol.3, for the description of SOVA equalizer and C. Douillard, A. Picart, M. Jezequel, P. Didier, C. Berrou and A. Glavieux, "Iterative correction of intersymbol interference: Turbo-equalization," European Transactions on Communications, vol. 6, pp. 507-511, 1995, where the SOVA equalizer is employed for turbo equalization

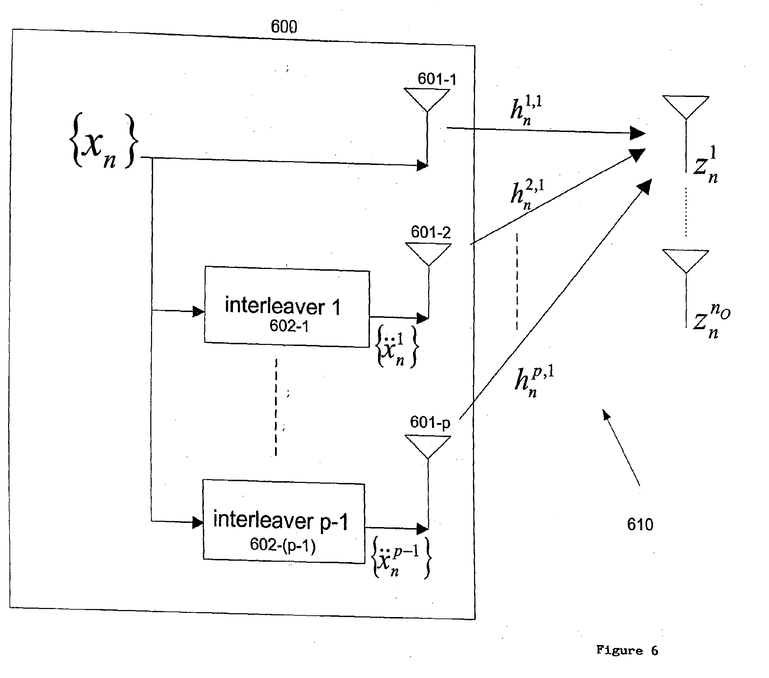

Spatial diversity can be increased by increasing the number of interleaved version of the data symbol sequence transmitted. This however comes at the cost of the need to use more transmit antennas and increased MSI. Figure 6 shows a 1/p rate multi-path space time code system comprising a transmitter 600 according to a further embodiment, and having more than two transmit antennas 601-1 to 601-p, and corresponding interleavers 602-1 to 602-(p-1).

For the term 'rate', eg. 1/p rate, the convention from channel coding is used where the rate is code rate and is defined as the ratio of the number of information bits before encoding and the number of coded bits after encoding. However, for multiple transmit antenna system convention, the rate is the effective information symbols transmitted by the transmit antennas at one signalling instant. For example, for two transmit antenna, two receive antenna system, the spatially multiplexed scheme has the rate of two, whereas if Alamouti STC is employed, the rate is one. Using the multiple transmit antenna system convention, the STC shown in Figure 6 has a rate of one.

The transmitter 600 receives a symbol sequence $\{x_n\}$, and this is interleaved by a first interleaver 602-1 to provide a first interleaved symbol sequence $\{\tilde{x}_n^1\}$ for transmission by the second antenna 601-2 simultaneously with transmission of the original sequence $\{x_n\}$ by the first antenna 601-1.

In addition, one or more further interleavers 602-2 to 602-(p-1) are used to further interleave sequences $\{x_n\}$ in a cascaded manner as shown. Thus for example a second interleaver 602-2 (not shown for clarity) interleaves the sequence $\{x_n\}$ to be transmitted by the third antenna 602-3 as interleaved sequence $\{\tilde{x}_n^2\}$. This is repeated up to transmit antennas 601-p and symbols are transmitted simultaneously from the plurality of antennas into the MEMO channel 610. Thus a (p-1)-th interleaver 602-(p-1) provides the interleaved sequence $\{\tilde{x}_n^{p-1}\}$ to be transmitted by the p-th antenna 602-p. The interleavers 602-1 to 602-(p-1) each provide a different re-ordering pattern.

Preferably the number of receive antennas is equal to or more than the number of transmit antenna.

This embodiment provides for further diversity and/or redundancy compared with the arrangement of figure 4.

In order to improve the spectral efficiency and to increase the data throughput of the STC arrangement, the number of spatial transmissions of the interleaved versions of the data sequence can be reduced through puncturing or by increasing the number of bits per symbol transmission for the interleaved data sequence. Note that puncturing can be performed symbol-based or bit-based.

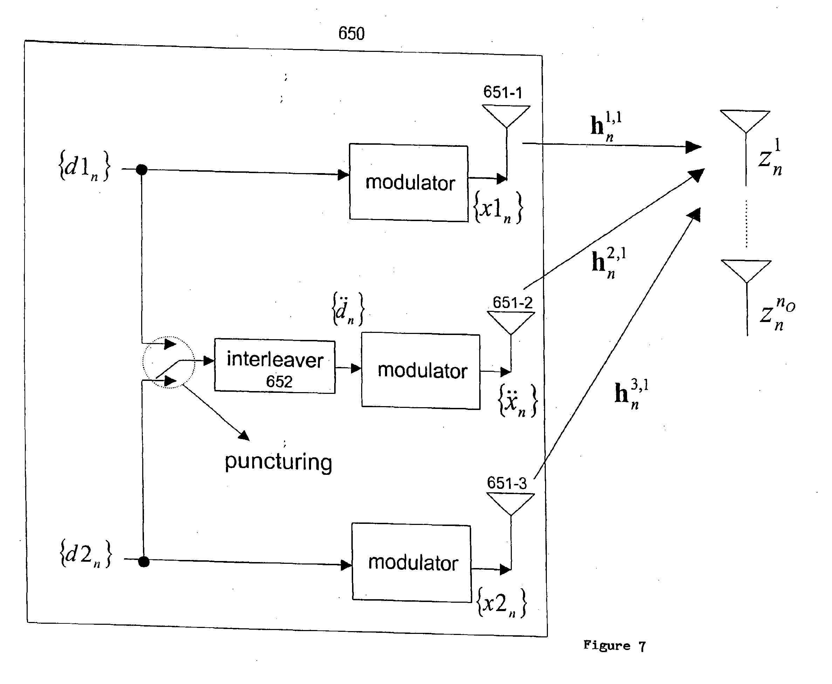

Figure 7 shows a transmitter 650 according to a further embodiment, and which employs puncturing or "bit selection" for an interleaved version of the bit sequence in order to increase the data throughput. Specifically, a 2/3-rate multi-path based space time code using puncturing is used, the transmitter 650 having three transmit antennas 651-1, 651-2, and 651-3, and one interleaver 652. The first antenna 651-1 is arranged to directly transmit a first symbol sequence $\{x1_n\}$ corresponding to a first bit stream $\{d1_n\}$.

The third antenna 651-3 receives a second symbol sequence $\{x2_n\}$ corresponding to a second bit stream $\{d2_n\}$ which it is arranged to directly transmit. The interleaver 652 interleaves the bit sequence $\{d_n\}$, chosen from bit sequence $\{d1_n\}$ and $\{d2_n\}$ according to a puncturing pattern, to provide the bit sequence $\{\tilde{d}_n\}$. The second antenna 651-2 transmits the interleaved symbol sequence $\{\tilde{x}_n\}$ corresponding to the bit sequence $\{\tilde{d}_n\}$, such that these are transmitted simultaneously with their respective direct symbol sequences $\{x1_n\}$ or $\{x2_n\}$, which are transmitted by the first and third antennas 651-1 and 651-3 respectively. Thus the selected interleaved symbol sequence $\{\tilde{x}_n\}$ is transmitted as the redundant spatial transmission.

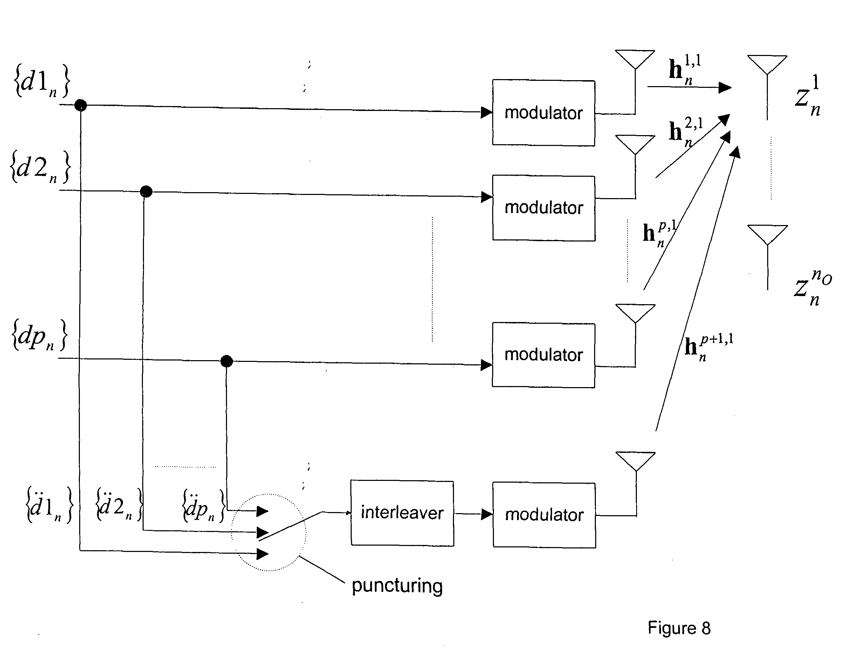

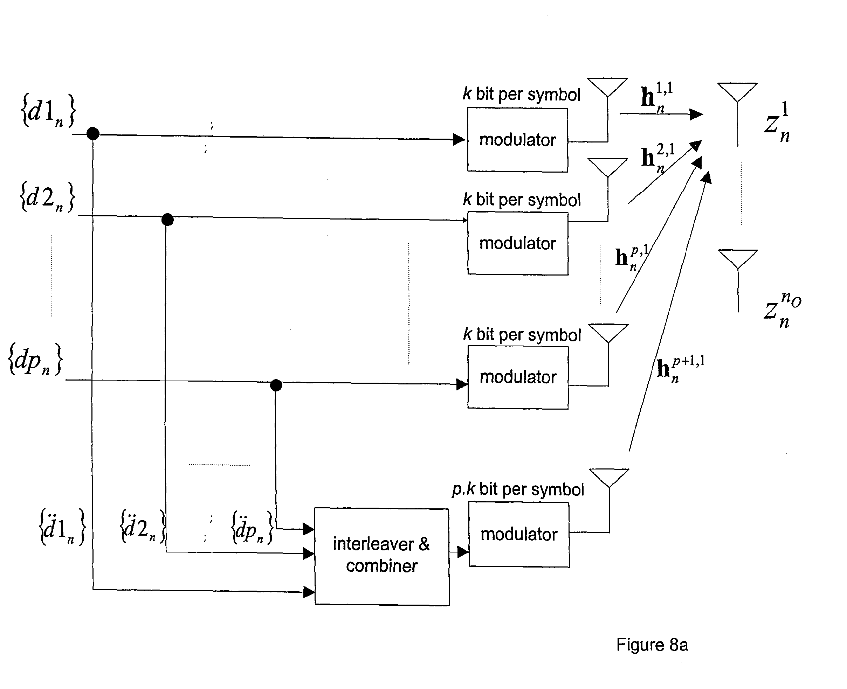

This principle can be extended to a higher throughput spatially multiplexed system as shown in figure 8 to improve the bandwidth efficiency. In general, p information blocks are transmitted simultaneously and redundancy is introduced by transmitting the interleaved version of the information blocks or sequences. To reduce the interference through spatial multiplexed transmission, the *p* data blocks are punctured before interleaving. In other words selected bits are chosen according to a particular pattern as the additional interleaved data block.

This principle could also be extended the other way to having a single sequence transmission and a punctured interleaved transmission. Since the number of bits is reduced because of puncturing, the interleaved sequence can be transmitted with lower bits per symbol compare to the transmission of the direct sequence so that direct and redundant symbols can be transmitted at the same time.

Puncturing will be known to those skilled in the art. Puncturing increases the code rate at the expense of weakening the error correcting power of the channel coding or the diversity from the interleaving in this case. Various known puncturing patterns can be applied to balance the need for error correction with the bandwidth required to forward the redundant information. In turbo code design, the puncturing pattern is chosen to provide the largest minimum codeword weight for the punctured code for a given constituent codes and channel interleavers. The design method often involves a systematic computer search for the optimal choice of constituent codes, puncture patterns and interleavers. For example to achieve a turbo code rate of $k/(k+1)$, one parity bit is transmitted for every $k$ information bits presented to the encoder input. Assuming that two constituent encoders are used, the rates of the two constituents after puncturing are the same and the parity bits to be transmitted must alternate between the two encoders. Therefore, the puncturers partition the parity sequence from each of the constituent encoder into $2k$-bit blocks, and save only one bit in each such block. Further, the puncturers are periodic in the sense that the same bit in each $2k$-bit blocks is saved for both encoders. Using the notation $P(u,v)$ to indicate a puncturer which saves the $u$th bit in every $2k$-bit block for the first encoder and the vth bit in every $2k$-bit block for the second encoder, where $1\leq u,v\leq 2k$. Note however that in this embodiment the puncturing is performed before the encoder which is the channel whereas for the turbo code, the puncturing is performed after the encoding.

Figure 8a shows a further embodiment having a transmitter where the interleaved bit sequence of $p$ ($\geq 2$) spatially multiplexed information blocks are combined and transmitted at a modulation mode with a higher number of bits per symbol in order to improve the data throughput of the STC and to decrease the MSI which will degrade the decoder performance. Here, p information blocks might be transmitted at different bits per symbol or modulation mode. Figure 8a shows the case where the same modulation mode is used for all $p$ information block. Examples of modulation mode include for a 1st antenna 64QAM, and for a second antenna QPSK.

The interleaved sequences can be combined in a variety of ways, for example given two spatially multiplexed information blocks, i.e. p=2, and the information modulation mode is QPSK with two bits per symbol, the interleaved bits from the information blocks are {a1, a2} from the first block and {b1, b2} from the second block for each QPSK symbols. The interleaved bits are combined in an alternate fashion with the sequence {a1, b1, a2, b2} to provide one 16QAM symbol for the transmission of the interleaved block.

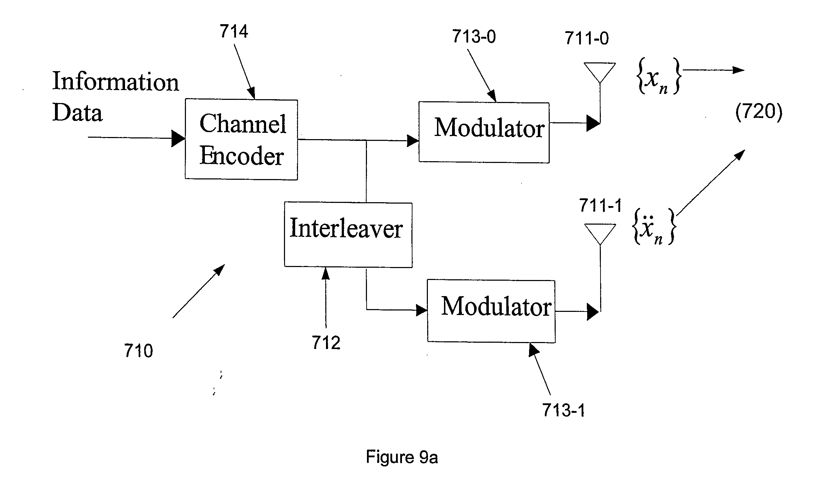

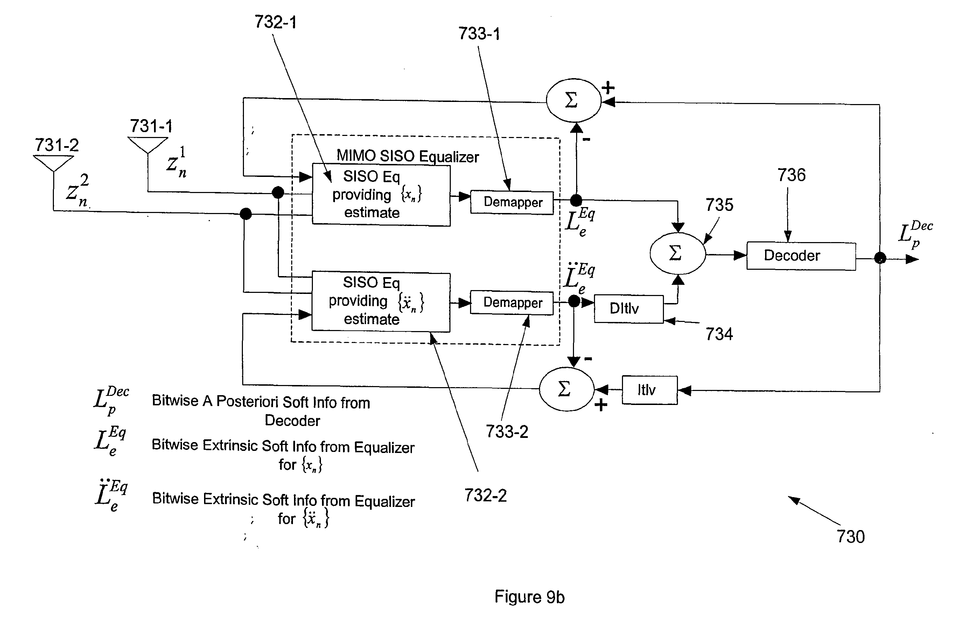

Figure 9a and 9b show a system according to a further embodiment in which channel coding is concatenated with the multi-path space-time coding. The system comprises a transmitter 710 having a plurality of transmit antennas 711 coupled to a MIMO channel 720, and a receiver 730 having a plurality of receive antennas 731 which are also coupled to the MIMO channel 720.

Referring to figure 9a, the transmitter 710 comprises an interleaver 712 which receives a symbol sequence $\{x_n\}$ and provides an interleaved symbol sequence $\{\ddot{x}_n\}$ as described previously. The symbol sequence $\{x_n\}$ is transmitted from a first antenna 711-0, and the interleaved symbol sequence $\{\ddot{x}_n\}$ is simultaneously transmitted from the second antenna 711-1. The symbol sequence $\{x_n\}$ is received from a modulator 713-0 which modulates an incoming data stream $\{d_n\}$ for transmission, including mapping the bits to symbols. Various well known modulation schemes can be used, for example BPSK, QPSK, 64QAM. The modulator required will depend on the transmission rate in terms of bits transmitted per second expected from the system.

The bit stream $\{d_n\}$ is provided by a channel encoder 714 which provides additional error coding concatenated with the interleaved space time coding provided by the last stages (711, 712 and 713) of the transmitter 710. Again any known coding scheme can be utilised, for example convolutional encoding, low-density parity check encoding or turbo-based encoding. The choice of channel coding scheme will depend on the block error rate requirement, the complexity of the decoder, etc, and other parameters known to those skilled in the art.

Figure 9b shows a schematic of a receiver 730 for use with the transmitter 710 of figure 9a. The receiver 730 comprises of two antennas 731-1 and 731-2, which provide a corresponding plurality of input signals $z_n^1$ to $z_n^2$. More generally a larger number $n_0$ of receive antennas can be employed with a corresponding increase in the number of input signals $z_n^1$ to $z_n^{n0}$. The receiver 730 comprises two SISO equalisers 732-1 and 732-2 which receive input signals $z_n^1$ and $z_n^2$ from each of the antennas 731-1 and 731-2. As described above with respect to figure 5, the equalisers and are arranged to recover the signals transmitted from each of the transmit antennas ($\{x_n\}$ and $\{\ddot{x}_n\}$ respectively).

A turbo decoding approach can be used as the data is interleaved and then effectively encoded in parallel across the MIMO channel by the different ISI in the different channels between each transmit and receive antenna pair. The additional channel encoding provided by the encoder 714 in the transmitter 710 is concatenated with this "turbo coding". Thus the equalisers 732-1 and 732-2 provide extrinsic probabilities for each transmitted data symbol, which is then followed by evaluating the extrinsic log-likelihood ratio of the transmitted bits that corresponds to that symbol. This second function is provided by the demapper blocks 733-1 and 733-2 coupled to the equalisers 732-1 and 732-2 respectively. A demapper maps the symbols to bits. In this context it functions to translate the symbol probabilities to bit probabilities as will be known to those skilled in the art.

The soft information $L_e^{Eq}$ and the de-interleaved soft information $\ddot{L}_e^x$ from the respective MAP blocks 733-1 and 733-2 are added and passed to a decoder 736. A de-interleaver 734 corresponding to the interleaver 712 of the transmitter 710 is used to de-interleave the soft information $\ddot{L}_e^x$ corresponding to the interleaved sequence $\{\ddot{x}_n\}$ transmitted

from the second transmitter antenna 711-2. A combiner 735 sums the LLR values of the soft information before passing to the decoder 736. This arrangement provides two independent soft information $L_e^{Eq}$ and $\ddot{L}_{i}^{p}$ or a priori knowledge of the transmitted data passed on to the decoder.

The channel decoder 736 which corresponds to the channel encoder 714 of the transmitter 710, then provides a posteriori information $L_p^{Dec}$ of the transmitted data and this is passed back to the equalizers 732-1 and 732-2 as inputs for the next iteration. The equalizers require extrinsic information as its soft input and therefore the soft information that the equalizer provides to the decoder previously is subtracted before it is used by the equalizer (This ensures that an independent statistic is being fed back).

For the case of punctured STC shown in figure 7 and 8, the soft information of the punctured bits $d_{n,punctured}$ will not be available from the SISO equalizer that provides the estimate of the interleaved symbol sequence $\{\ddot{x}_n\}$. Here, a default soft value is given for the punctured bits where the bit $d_{n,punctured}$ being +1 or -1 is equiprobable, i.e.

$$\ddot{L}_e^{Eq}\left(d_{n,punctured}\right)= 0 \, .$$

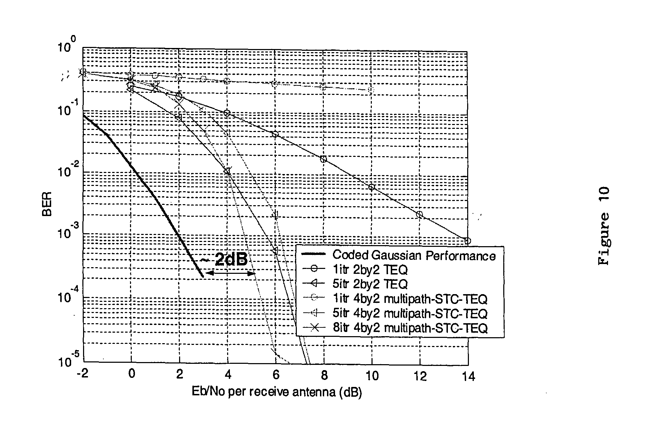

Figure 10 shows the BER performance for the average signal to noise power ratio per information bit, $E_b/N_o$, by each receive antenna of a number of embodiments, compared with a number of a known channel-coded system. The embodiments shown utilise 8PSK half-rate (5,7)oct convolutional-coded 4-by-2 and 2-by-2 multipath based space time coded system where MMSE based turbo-equalisation is used. The channel is assumed to be quasi-static, uncorrelated Rayleigh faded with five tap equal-weighted delay profile.

A preferred equaliser arrangement is now described for use with the embodiment described with respect to figure 9b. Broadly speaking, this is a turbo equalizer in the form of a multi-dimensional transversal filter. Coefficients of the filter are adjusted according to a Minimum Mean Square Error (MMSE) criterion to mitigate the effects of both Inter-Symbol Interference (ISI) and Multi-Stream Interference (MSI) and provide a soft output, with the aid of soft information relating to multiple transmitted data signals received from a decoder. The equalizer processes signals from all the transmit antennas in parallel (although potentially in a time-multiplexed manner in processor-based embodiments) and is thus able to "detect" and equalise a multistream signal. The soft or likelihood information from the decoder is used to determine the covariance and mean of the multistream transmitted signal for evaluating the coefficients of the equalizer and also to determine a mean or expected value of the received signal for MMSE based detection.

In embodiments the SISO equalization may be performed in either or both of the time and frequency domains. Initially a time-domain implementation will be described; details of an alternative frequency-domain implementation will be given later.

The elements of the equaliser will generally be implemented by a digital signal processor and the structure and operation of a first, time-domain embodiment of the equaliser will therefore first be described in mathematical terms.

Consider first a signal transmission model for a linear, dispersive and noisy communication system with $n_1$ inputs and $n_0$ outputs (that is a $n_1 \times n_0$ MIMO system). The complex-valued baseband equivalent signal model can be represented as by equation (1) below:

$$\mathbf{z}_n = \sum_{k=0}^{L-1}\mathbf{h}_k\mathbf{x}_{n-k} + \mathbf{w}_n \qquad\qquad (1)$$

where L is the channel length in symbol periods, where $z_n = [z_n^1 \; z_n^2 \; \cdots \; z_n^{n_0}]^T$ is the signal received by the $n_0$ receive antennas, where $w_n = [w_n^1 \; w_n^2 \; \cdots \; w_n^{n_0}]^T$ is the noise component, where $x_n = [x_n^1 \; x_n^2 \; \cdots \; x_n^{n_1}]^T$ is signal transmitted by the $n_1$ transmit antennas, and where n labels a symbol (ie. in this case corresponds to time in symbol periods). The dispersive channel matrix is denoted by:

$$\mathbf{h}_k = \begin{bmatrix} h_k^{1,1} & h_k^{2,1} & \cdots & h_k^{n_I,1} \\ h_k^{1,2} & h_k^{2,2} & \cdots & h_k^{n_I,2} \\ \vdots & \vdots & \ddots & \vdots \\ h_k^{1,n_O} & h_k^{2,n_O} & \cdots & h_k^{n_I,n_O} \end{bmatrix}.$$

Here, $h_k^{i,j}$ represents the $k$th channel tap for a channel link between an ith transmit antenna and a $j$th receive antenna as shown in Figure 2.

Consider an embodiment of a transversal filter based equaliser with (integer) N coefficients or taps where $N = N1 + N2 + 1$ ($N1$ and $N2$ in effect specifying the length of the causal and non-causal portions of the filter). The filter employs an observation of a block of received signal of length N in symbol periods, which is denoted as:

$$Z_n = HX_n + W_n \tag{2}$$

where

$$\mathbf{Z}_n = \begin{bmatrix} \mathbf{z}_{n-N2}^T & \cdots & \mathbf{z}_n^T & \cdots & \mathbf{z}_{n+N1}^T \end{bmatrix}^T \tag{3}$$

is the $Nn_0 \times 1$ received signal vector,

$$\mathbf{W}_n = \begin{bmatrix} \mathbf{w}_{n-N2}^T & \cdots & \mathbf{w}_n^T & \cdots & \mathbf{w}_{n+N1}^T \end{bmatrix}^T \tag{4}$$

is the $Nn_0 \times 1$ received noise vector,

$$\mathbf{X}_n = \begin{bmatrix} \mathbf{x}_{n-N2-L+1}^T & \cdots & \mathbf{x}_n^T & \cdots & \mathbf{x}_{n+N1}^T \end{bmatrix}^T \tag{5}$$

is the $(N + L - 1)n_I \times 1$ transmit signal vector which convolves with the $Nn_o \times (N + L - 1)n_i$ channel impulse response (CIR) matrix **H** given by:

$$\mathbf{H} = \begin{bmatrix} \mathbf{h}_{L-1} & \mathbf{h}_{L-2} & \cdots & \mathbf{h}_0 & \mathbf{0}_{n_O \times n_I} & \cdots \\ \mathbf{0}_{n_O \times n_I} & \mathbf{h}_{L-1} & \mathbf{h}_{L-2} & \cdots & \mathbf{h}_0 & \cdots \\ \ddots & \vdots & \vdots & \ddots & \ddots & \ddots \\ \cdots & \mathbf{0}_{n_O \times n_I} & \mathbf{h}_{L-1} & \mathbf{h}_{L-2} & \cdots & \mathbf{h}_0 \end{bmatrix} \tag{6}$$

Determination of the filter coefficients and of a soft transmitted symbol estimate by the equaliser will next be considered.

An optimum linear estimate of the transmitted symbols

$$\hat{\mathbf{x}}_n = \begin{bmatrix} \hat{x}_n^1 & \hat{x}_n^2 & \cdots & \hat{x}_n^{n_I} \end{bmatrix}^T$$

upon receiving $\mathbf{Z}_n$, based on the second-order statistics (that is, means and covariances) has the form given in equation (7) below (see, for example, "An Introduction to Signal Detection and Estimation", H. Vincent Poor, Second Edition, Springer, ISBN0-387-94173-8 at pages 221 to 233):

$$\hat{\mathbf{x}}_n = E(\mathbf{x}_n) + \mathbf{A}_n^H [\mathbf{Z}_n - E(\mathbf{Z}_n)] \qquad (7)$$

where, as before, $E(\cdot)$ denotes a mean or expectation value and $\mathbf{A}_n$ is the set of N linear filter/equalizer coefficients at symbol (time) $n$. It can be seen from equation (7) that the estimate of the transmitted symbol $\mathbf{x}_n$ is the mean offset of the filtered difference between the received signal vector $\mathbf{Z}_n$ and the ISI and MSI component $E(\mathbf{Z}_n)$ at time $n$.

Minimizing the mean square error cost function $E(|\mathbf{x}_n - \mathbf{x}_n|^2)$, an optimum set of filter coefficients $\mathbf{A}_n$ is given by:

$$\mathbf{A}_n = \text{cov}(\mathbf{Z}_n, \mathbf{Z}_n)^{-1} \text{cov}(\mathbf{Z}_n, \mathbf{x}_n) \qquad (8)$$

where the covariance operator $\text{cov}(\mathbf{x}, \mathbf{y}) = E(\mathbf{x}\mathbf{y}^H) - E(\mathbf{x})E(\mathbf{y}^H)$. Equation (7) can be expressed in the form:

$$\hat{\mathbf{x}}_n = E(\mathbf{x}_n) + \text{cov}(\mathbf{x}_n, \mathbf{x}_n)\mathbf{F}_n^H [\mathbf{Z}_n - E(\mathbf{Z}_n)] \qquad (9)$$

where the expectation value of the received signal observed at the equalizer taps, in terms of the transmitted signal or an estimate of this signal, is given by:

$$E(Z_n) = H E(X_n) \qquad (9a)$$

As will be seen later, $E(\mathbf{Z}_n)$ may be determined from the soft decoder output. In equation (9) the $Nn_o \times n_i$ filter matrix $\mathbf{F}_n$ is defined as

$$\begin{aligned} \mathbf{F}_n &= \mathbf{R}_{ZZ}^{-1}\mathbf{S} \\ &= \left[\mathbf{R}_{WW} + \mathbf{H}\mathbf{R}_{XX}\mathbf{H}^H\right]^{-1}\mathbf{S} \end{aligned} \qquad (10)$$

where the covariances are defined as

$$R_{ZZ} = \text{cov}(Z_n, Z_n),$$

$$R_{XX} = \text{cov}(X_n, X_n),$$

$$R_{WW} = \text{cov}(W_n, W_n).$$

The $Nn_o \times n_i$ CIR matrix **S** introducing the symbol interference from the $n$-th transmitted symbols is given by:

$$\mathbf{S} = \mathbf{H}\left[\mathbf{0}_{n_I \times (N2+L-1)n_I} \quad \mathbf{I}_{n_I \times n_I} \quad \mathbf{0}_{n_I \times N1n_I}\right]^H \qquad (11)$$

In equation (11) matrix $\mathbf{I}_{i \times i}$ is an $i \times i$ identity matrix and matrix $\mathbf{0}_{i \times j}$ contains all zeros.

It can be understood from the form of the equalizer (filter) coefficient matrix $\mathbf{F}_n$ expressed in equation (10), which includes the channel matrix **H** as defined in equation (6), that the equalizer not only performs equalization on the ISI but also mitigates MSI.

The mean and covariance of the transmitted signal, $E(\mathbf{x}_n)$ and $\text{cov}(\mathbf{x}_n, \mathbf{x}_n)$, which are used to compute the filter coefficients and the estimated transmitted signal, may be obtained using equations (16) and (17) below. The block-diagonal covariance matrix $\mathbf{R}_{XX}$ comprises ($N+L-1$) block-diagonal blocks of $\text{cov}(\mathbf{x}_n, \mathbf{x}_n)$ as follows:

$$\mathbf{R}_{XX} = \begin{bmatrix} \text{cov}\left(\mathbf{x}_{n-N2-L+1}, \mathbf{x}_{n-N2-L+1}\right) & & \\ & \ddots & \\ & & \text{cov}\left(\mathbf{x}_{n+N1}, \mathbf{x}_{n+N1}\right) \end{bmatrix}$$

The CIR matrix H may be obtained from a MIMO channel estimation block in the receiver in a conventional manner. Thus in one embodiment known pilot or training sequences are periodically inserted into the signal from each transmit antenna and at the receiver these known sequences are encoded and provided to a channel estimator together with one (or more) input signal streams from the one (or more) receive antennas. Providing the training sequences in the signal streams have a low cross-correlation coefficient the channel estimator is then able to determine the CIR matrix H by, in effect, correlating the encoded known data sequence for each stream with the actual received data. An example of such a channel estimator is described in Ye Geoffrey Li, "Simplified channel estimation for OFDM systems with multiple transmit antennas", IEEE Transactions on Wireless Communications, Vol. 1, No. 1, pg. 67, Jan 2002, which is hereby incorporated by reference.

Advantageously the channel estimation may also be performed iteratively by using the estimated transmitted symbols $\hat{x}_n^i$ as additional training symbols. For background information relating to this reference may be made to Tetsushi Abe and Tad Matsumoto, "Space-Time Turbo Equalization and Symbol Detection in Frequency Selective MIMO Channels" in: Proc. Veh. Techn. Conference, IEEE VTS 5th. Vol. 2. pg 1230-1234, 2001, also hereby incorporated by reference. Thus, for example, multiple, deinterleaved outputs from the decoder (one for each transmit antenna) may be re-encoded and provided to the channel estimator similarly to a known training sequence. In this way, an updated estimated value of H may be obtained on every turbo equalization iteration and this may in turn be used to compute the equalizer coefficients.

For good convergence behaviour the soft transmitted symbol information $\hat{x}_n^i$ provided by the equalizer should be independent from the soft transmitted symbol information from the decoder in the iterative structure. At the transmitter a sequence of m bits, where m is the number of bits per symbol, is encoded as a codeword $c_{n,j}^i \in \{+1,-1\}, j = 1, \cdots, m$ for transmit antenna i. The decoder provides soft log likelihood ratio information $L(c_{n,j}^i)$, j = 1, $\cdots$, m where $L(c_{n,j}^i) = \ln\{P(c_{n,j}^i = +1) / P(c_{n,j}^i = -1)\}$ which, from the point of view of the equaliser, may be considered as *a priori* information.

To provide good convergence behaviour the likelihood information for bits $c_{n,j}^i, j = 1, \cdots, m$ (corresponding to symbol $x_n^i$) which are available to the equalizer is set to $L(c_{n,j}^i)$ *Equalizer* $= 0, j = 1, \cdots, m$ to derive an equation for $\hat{x}_n^i$. (During the turbo equalisation these values may also be initialised to zero). Then, eliminating the dependence of the equalisation

on $L(c^i_{n,j})$, $j = 1, \cdots, m$ provided by the decoder, and setting the expectation $E(x^i_n)^{Equalizer} = 0$ and the covariance $cov(x^i_n,$ $x^i_n)^{Equalizer} = \delta^2_{x,i}$, where $\delta^2_{x,i}$ is an initial value, for example unity (depending upon the relative gain of the transmit antennas), for the signal variance of transmitted symbols from transmit antenna i, the i th component of the estimated transmitted symbol $x_n$ in equation (9) can be expressed as scaled version of $\mathbf{F}_n$ (using the matrix inversion lemma), as shown in equation (12) below:

$$\hat{x}^i_n = K^i_n \mathbf{f}^{iH}_n \left[ \mathbf{Z}_n - \left( E(\mathbf{Z}_n) - \mathbf{e}^i E\left(x^i_n\right) \right) \right] \qquad (12)$$

where the filter gain $K^i_n$ is given by:

$$K^i_n = \left( 1 + \left( \delta^2_{x,i} - cov\left(x^i_n, x^i_n\right) \right) \mathbf{f}^{iH}_n \mathbf{e}^i \right)^{-1} \cdot \delta^2_{x,i} \qquad (13)$$

In equations (12) and (13) $\mathbf{f}^i_n$ is the i th column of the filter matrix $\mathbf{F}_n$ defined in equation (10) and $\mathbf{e}^i$ is the i th column of the symbol interference matrix $\mathbf{S}$ given in equation (11).

Next a reduced complexity method of determining $R_{ZZ}^{-1}$ is described, for computing the filter matrix $\mathbf{F}_n$ via equation (10). In order to avoid performing a direct matrix inversion of the $Nn_o \times Nn_o$ covariance matrix $\mathbf{R}_{ZZ}$ to compute the filter matrix $\mathbf{F}_n$ for every estimate of symbols $\hat{x}_n$, a time-recursive update algorithm may be employed. The algorithm is similar to one described in the Tuchler et al. paper (*ibid*) and exploits the existence of common submatrices within a partitioned covariance matrix. The matrix $\mathbf{R}_{ZZ}^{-1}$ at a time $n + 1$ may be determined by the manipulation of submatrices as set out in equation (14):

$$\mathbf{R}_{ZZ}^{-1}(n+1) = \begin{bmatrix} \mathbf{U}_N & \overline{\mathbf{u}}_N \\ \overline{\mathbf{u}}_N^H & \mathbf{u}_N \end{bmatrix} \qquad (14)$$

These submatrices may in turn be determined based upon a previous $\mathbf{R}_{ZZ}^{-1}$ at a time $n$, as shown by equations (15) below:

$$\mathbf{R}_{ZZ}^{-1}(n) = \begin{bmatrix} \mathbf{u}_P & \bar{\mathbf{u}}_P^H \\ \bar{\mathbf{u}}_P & \mathbf{U}_P \end{bmatrix}$$

$$\mathbf{U}_N = \Sigma_P^{-1} + \varpi_N \mathbf{u}_N^H \varpi_N^H$$

$$\bar{\mathbf{u}}_N = -\varpi_N \mathbf{u}_N$$

$$\mathbf{u}_N = \left[ \sigma_N - \omega_N^H \varpi_N \right]^{-1}$$

$$\varpi_N = \Sigma_P^{-1} \omega_N$$

$$\begin{bmatrix} \omega_N \\ \sigma_N \end{bmatrix} = \left[ \mathbf{R}_{WW} + \mathbf{H}\mathbf{R}_{XX}(n+1)\mathbf{H}^H \right] \begin{bmatrix} \mathbf{0}_{(N-1)n_o \times n_o} \\ \mathbf{I}_{n_o \times n_o} \end{bmatrix}$$

$$\Sigma_P^{-1} = \mathbf{U}_P - \bar{\mathbf{u}}_P \mathbf{u}_P^{-1} \bar{\mathbf{u}}_P^H$$

(15)

The sizes of the matrices $\omega_N$, $\sigma_N$, $\mathbf{u}_P$, $\bar{\mathbf{u}}_P$, $\mathbf{U}_P$ are $(N-1)n_o \times n_o$, $n_o \times n_o$, $n_o \times n_o$, $(N-1)n_o \times no$ and $(N-1)n_o \times (N-1)n_o$, respectively. It can therefore be seen that only the matrix inversion of $n_o \times n_o$ matrices $\mathbf{u}_P$ and $(\sigma_N - \omega_N^H \bar{\omega}_N)$ is required to update the matrix $\mathbf{R}_{ZZ}^{-1}$. The term $\mathbf{R}_{WW}$ is the noise covariance and a value for this may be determined, for example, theoretically from the receiver bandwidth (particularly where the front end filter has a relatively sharp cut-off; see also 3GPP TS25.215 v5.2.1 for background on received power), or by a measurement of the level of noise (and/or interference) at the receiver, or by a combination of both these techniques. Where the noise levels at the receive antennas are similar $\mathbf{R}_{WW}$ may approximate to a fraction of $\mathbf{I}$.

The soft (likelihood) value inputs to the equaliser from the decoder will now be discussed.

The soft information provided by the decoder in terms of the likelihood values are utilized to provide the mean $E(x_n^i)$ and covariance $\text{cov}(x_n^i, x_n^i)$ of the transmitted symbols, which are required to compute $x_n^i$ in Equation (9). The mean and covariance values are obtained as shown below:

$$E\left(x_n^i\right) = \sum_{\alpha_k \in S} \alpha_k P\left(x_n^i = \alpha_k\right)$$

(16)

and

$$\text{cov}\left(x_n^i, x_n^i\right) = \left( \sum_{\alpha_k \in S} \left|\alpha_k\right|^2 P\left(x_n^i = \alpha_k\right) \right) - \left|E\left(x_n^i\right)\right|^2$$

(17)

At the transmitter a sequence of m bits c is mapped to a symbol x selected from a $Q = 2^m$-ary symbol alphabet $S = \{\alpha_1, \alpha_2, \cdots, \alpha_Q\}$ in which each symbol $\alpha_k$ corresponds to an $m$ bit pattern $\mathbf{s}_k = [s_{k,1}\ s_{k,2}\ \ldots\ s_{k,m}]$, $s_{k,j} \in \{+1, -1\}$. The probabilities of the transmitted symbols are given by:

$$P\!\left(x_n^i = \alpha_k\right) = \Pi_{j=1}^m P\!\left(c_{n,j}^i = s_{k,j}\right)$$
$$= \Pi_{j=1}^m 1/2.\!\left\{1 + s_{k,j}\,\tanh\!\left(L\!\left(c_{n,j}^i\right)\!/2\right)\right\} \tag{18}$$
$$i = 1,\cdots,n_I,\ k = 1,\cdots,Q$$

The soft (likelihood) value outputs from the equaliser to the decoder will next be considered.

At the output of the equalizer, it is assumed the probability density functions of the estimated symbols $p(x_n^i$ $|c_n^i = s_k)$ are Gaussian with mean $\mu_{n,k}^i$ and variance $\sigma^2{}_{n,k}{}^i$. The log-likelihood ratios of the bits contained in the transmitted symbols are then given by:

$$L_e\!\left(c_{n,j}^i\right) = \ln\!\left(\sum_{\forall s_k : s_{k,j}=+1} \exp\!\left(\frac{-\left|E\!\left(\hat{x}_n^i - \mu_{n,k}^i\right)\right|^2}{\sigma_{n,k}^{2\ i}} + \phi_{n,j}^i\right)\right)$$
$$- \ln\!\left(\sum_{\forall s_k : s_{k,j}=-1} \exp\!\left(\frac{-\left|E\!\left(\hat{x}_n^i - \mu_{n,k}^i\right)\right|^2}{\sigma_{n,k}^{2\ i}} + \phi_{n,j}^i\right)\right) \tag{19}$$
$$\phi_{n,j}^i = \sum_{\forall j' : j' \neq j} s_{k,j'} L\!\left(c_{n,j'}^i\right)\!/2$$

Based on the derivation obtained for the estimate of the transmitted symbol $x_n^i$ in equation (12) the mean and variance of the equalizer output may then be written:

$$\mu_{n,k}^i = K_n^i f_n^{iH}\left[E\!\left(\mathbf{Z}_n \mid x_n^i = \alpha_k\right) - \left(E\!\left(\mathbf{Z}_n\right) - \mathbf{e}^i E\!\left(x_n^i\right)\right)\right]$$
$$= K_n^i \alpha_k \mathbf{f}_n^{iH} \mathbf{e}^i \tag{20}$$

and

$$\sigma_{n,k}^{2\ i} = K_n^{i2}\mathbf{f}_n^{iH}\,\mathrm{cov}\!\left(\mathbf{Z}_n, \mathbf{Z}_n \mid x_n^i = \alpha_k\right)\mathbf{f}_n^i$$
$$= K_n^{i2}\left(\mathbf{f}_n^{iH}\mathbf{R}_{zz}\mathbf{f}_n^i - \mathrm{cov}\!\left(x_n^i, x_n^i\right)\mathbf{f}_n^{iH}\mathbf{e}_n^i\mathbf{e}_n^{iH}\mathbf{f}_n^i\right) \tag{21}$$

The logarithmic summation of exponentials used in equation (19) to compute the equalizer's soft output,

$$\ln\!\left(\sum_{k=1}^n \exp(\lambda_k)\right),$$

may advantageously be computed using the Jacobian logarithmic relationship:

$$\ln\left(\sum_{k=1}^{n}\exp(\lambda_k)\right) = J(\lambda_n, J(\lambda_{n-1}, \cdots J(\lambda_3, J(\lambda_2, \lambda_1))\cdots))$$

$$J(\lambda_1, \lambda_2) \approx \max(\lambda_1, \lambda_2) + f_c(|\lambda_1 - \lambda_2|)$$

Here $f_c(x)$ is a logarithmic correction function that can be tabulated in a look-up table such as that given in Table 1 below.

| $x$ | $f_c(x)$ |
| --- | --- |
| $x > 3.7$ | 0.0 |
| $3.7 \geq x > 2.25$ | 0.05 |
| $2.25 \geq x > 1.5$ | 0.15 |
| $1.5 \geq x > 1.05$ | 0.25 |
| $1.05 \geq x > 0.7$ | 0.35 |
| $0.7 \geq x > 0.43$ | 0.45 |
| $0.43 \geq x > 0.2$ | 0.55 |
| $0.2 \geq x$ | 0.65 |

Table 1

In this way the computational complexity of technique may be reduced by replacing the use of logarithmic and exponential functions in the likelihood calculation with a simple look-up table and "max()" function.

To further reduce the computation complexity, the equalizer coefficients, that is terms $\mathbf{F}_n$ and $K_n^i$ defined in equations (10) and (13) respectively, may be set to be non-varying with time n. An average of the covariance matrix

$$\overline{\mathbf{R}}_{XX} = \frac{1}{P}\sum_{n=1}^{P}\mathrm{cov}(\mathbf{X}_n, \mathbf{X}_n)$$

and

$$\overline{\mathrm{cov}(x_n^i, x_n^i)} = \frac{1}{P}\sum_{n=1}^{P}\mathrm{cov}(x_n^i, x_n^i)$$

over a received symbol packet of P symbols, may instead be used to compute the coefficients in Equation (10) and (13). These time invariant equalizer coefficients $\mathbf{F}$ and $K^i$ may then be used to facilitate a reduced complexity computation of the transmitted symbol $\hat{x}_n^i$ in Equation (12). In order to avoid evaluating a new value of equalizer output variance for every symbol estimate, the variance $\sigma_{n,k}^{i\,2}$ can be approximated based on equation (21) with the time average

$$\overline{\sigma_{n,k}^{2}}^{i} = \frac{1}{P}\sum_{n=1}^{P}\sigma_{n,k}^{2}{}^{i}$$
$$= K_{n}^{i\,2}\left(\mathbf{f}_{n}^{i\,H}\left(\mathbf{H}\overline{\mathbf{R}}_{XX}\mathbf{H}^{H} + \mathbf{R}_{WW}\right)\mathbf{f}_{n}^{i} - \overline{\mathrm{cov}\left(x_{n}^{i}, x_{n}^{i}\right)}\mathbf{f}_{n}^{i\,H}\mathbf{e}_{n}^{i}\mathbf{e}_{n}^{i\,H}\mathbf{f}_{n}^{i\,H}\right) \quad (22)$$

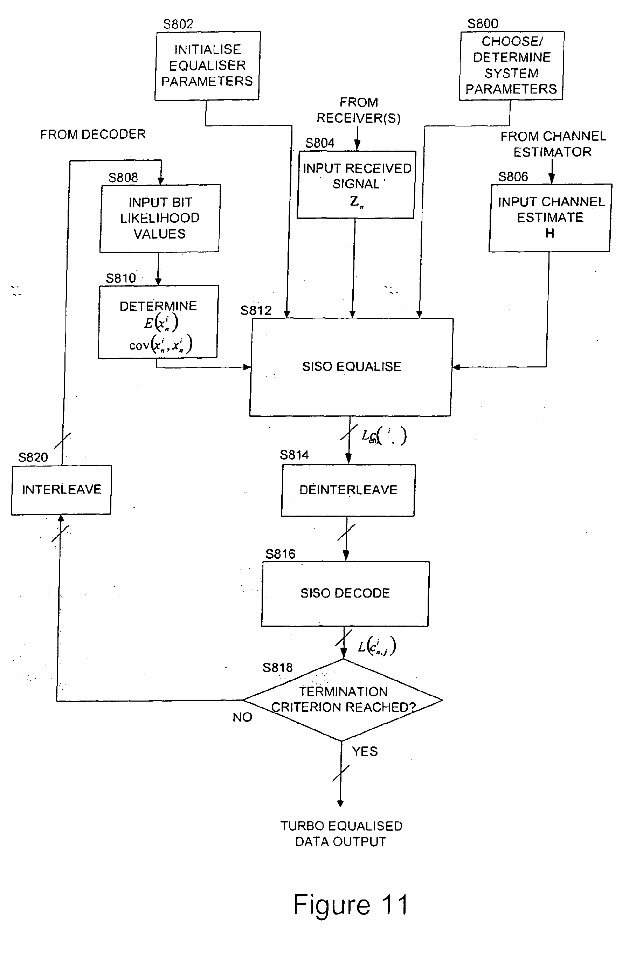

Figure 11 shows a flow diagram of an implementation the above-described turbo equalisation procedure. System parameters are determined or chosen at step S800 including, for example, the symbol alphabet S and the number of filter coefficients N = N1 + N2 (N1 and N2 are typically chosen such that N1=N2=L). Strictly speaking, however, this is not part of the actual equalisation procedure.

At step S802 equaliser parameters are initialised, for example by setting $E(x_{n}^{i})$ =0, $\mathrm{cov}(x_{n}^{i}, x_{n}^{i}) = \delta_{x,i}^{2}$, and $L$ $(c_{n,j}^{i})$= 0 (a log likelihood ratio L(.) of 0 implying c=+1 and c=-1 are equiprobable), then at step S804 a block of received signal $\mathbf{Z}_{n}$ is input from one or more receive antenna(s) and, at step S806, a estimated CIR matrix H is input from a channel estimator.

At step S808 the mean $E(x_{n}^{i})$ and covariance $\mathrm{cov}(x_{n}^{i}, x_{n}^{i})$ of the transmitted symbols are obtained, according (after the first iteration) to the a priori information of the transmitted bits from the SISO decoder $L(c_{n,j}^{i})$, i=1,···, $n_{1}$, j=1,···, m (where m is the number of bits per symbol) using equations (16), (17) and (18). Then, at step S812, using the mean $E(x_{n}^{i})$ and covariance $\mathrm{cov}(x_{n}^{i}, x_{n}^{i})$ values of the transmitted symbols the equalizer coefficients $\mathbf{F}_{n}$ and $K_{n}^{i}$ are obtained (using equations (10) and (13) respectively) and the mean of the received signal $E(\mathbf{Z}_{n})$ is determined using equation (9a). The estimated transmitted signal $\hat{\mathbf{x}}_{n}$ is then given by equation (12), and the "extrinsic" information on the transmitted symbols, $L_{e}(c_{n,j}^{i})$, which will provide a soft input to the SISO decoder from the equaliser, is obtained using equation (19) given the estimated transmitted symbols and the a priori information relating to the transmitted bits.

Deinterleaving is performed at step S814, corresponding to the interleaving performed after encoding and before transmission of the data at the transmitter. Thus the extrinsic information from the equalizer is deinterleaved before passing to the decoder. Then at step S816 the extrinsic information relating to the transmitted bits is used as the a priori knowledge at the decoding stage to provide the decoder's extrinsic information. The deinterleaved signals are decoded in accordance with the encoding used at the transmitter. A check is then made, at step S818, to determine whether a termination criterion has been reached and, if it has not, the procedure loops back to reinterleave the extrinsic information from the decoder and to pass this back to the equalizer via step S808. The termination criterion may comprise, for example, a predetermined number of iterations or a determination of whether the decoder soft output, that indicates the reliability of the decoded data, is more than a threshold value. If the termination criterion has been met the equalized and decoded bits at the final iteration are provided as an output estimate of the transmitted data bits.

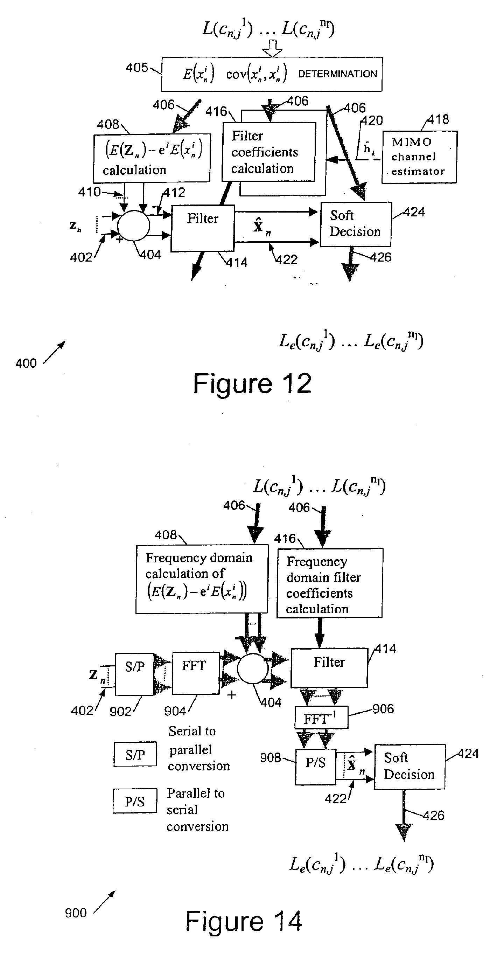

Figure 12 shows a block diagram of a soft-in-soft-out filter-based MIMO equalizer 400. The equaliser comprises an input 402 to receive a plurality of received signal blocks from a corresponding plurality of receive antennas, these received signal inputs providing a first set of inputs to a subtractor 404. A second set of inputs to the equaliser 400 comprises a set of soft or likelihood values 406 from a soft-in-soft-out decoder, to provide a priori transmitted bit information to the equaliser. This information is processed by block 405 to determine $E(x_{n}^{i})$ and $cov(x_{n}^{i}, x_{n}^{i})$ and these (estimated) mean (or expectation) and covariance values are used by block 408 to perform a calculation $(E(Z_{n})\text{-}e^{i}E(x_{n}^{i}))$ to determine an expected set of received signal values. This provides a second set of inputs 410 to subtractor 404 for subtraction from the first set of inputs 402 to provide a "compensated" signal 412 to a linear (affine) or transversal filter 414. The soft likelihood values 406 from SISO decoder are used by a filter coefficient calculation block 416 to determine a set of coefficients for filter 414. A MIMO channel estimator 418 provides a channel estimate input 420 to this filter coefficient calculation block 416. The output of filter 414 comprises a set of estimated transmitted signal values 422, one for each transmit antenna, which are in turn provided to a soft decision block 424 which provides a corresponding plurality of outputs 426 comprising soft (or likelihood) transmitted bit values which are suitable for providing a soft input to the SISO decoder.

Referring now to Figure 14 this shows a block diagram of a soft-in-soft-out filter-based MIMO equalizer 900 configured to operate in the frequency domain. The main elements of equaliser 900 are similar to those of Figure 12 and are indicated by like reference numerals. The main differences are that calculation blocks 408 and 416 perform frequency domain calculations and that subtractor 404 and filter 414 operate in the frequency rather than the time domain (though, for simplicity of comparison, the same reference numerals have been employed and the channel estimator has been omitted). Thus the main additions are a serial-to-parallel conversion block 902 and fast Fourier transform (FFT) block 904 prior to subtractor 404 and filter 414, and an inverse fast Fourier transform (FFT$^{-1}$) 906 and a parallel-to-serial conversion block 908 following filter 414. These blocks convert the received signals from the time to frequency domain for processing and back to the time domain after processing.

Background information relating to SISO equalisation in the frequency domain can be found in Tüchler, M., Hagenauer, J.,"Turbo equalization' using frequency domain equalizers" in: *Proc. Allerton Conference,* Monticello, IL, USA, Oct 2000, to which reference may be made. It will be appreciated, however, that this reference only discloses frequency domain turbo equalisation for a single-transmit-antenna-single-receive-antenna system. Other background information can be found in M. V. Clark, "Adaptive Frequency-Domain Equalization and Diversity Combining for Broadband Wireless Communications", IEEE JSAC, vol. 16, no. 8, pp. 1385-1395, Oct. 1998, and D. Falconer, S. L. Ariyavistakul; A. Benyamin-Seeyar, B. Eidson, "Frequency Domain Equalization for Single-Carrier Broadband Wireless Systems", IEEE Communications Magazine, pp. 58-66, April 2002.

Continuing to refer to the example of a frequency domain implementation of the equaliser shown in Figure 14, the signals from the receive antenna(s) are transformed into the frequency domain by Fast Fourier Transform (FFT) on a per FTT block/packet basis and the spectra of the received signals are equalized by multiplying the spectrum of each branch with the frequency domain coefficients of the equalizer. Frequency domain equalization again reduces the computational complexity of the equalization task by processing an entire FFT block/packet of received symbols at once in the frequency domain instead of symbol-by-symbol in the time domain although it will be appreciated that because of this the equalizer coefficients are time-invariant per FFT block. Furthermore a cyclic extension (for example, prefix) should be added to the transmitted symbol block/packet before transmission (to provide an integral number of cycles within the FFT interval) although this is discarded at the receiver. The frequency domain implementation of the turbo equaliser is suitable for both time and/or frequency domain coded data, and may be used, for example, with MIMO OFDM transmissions.

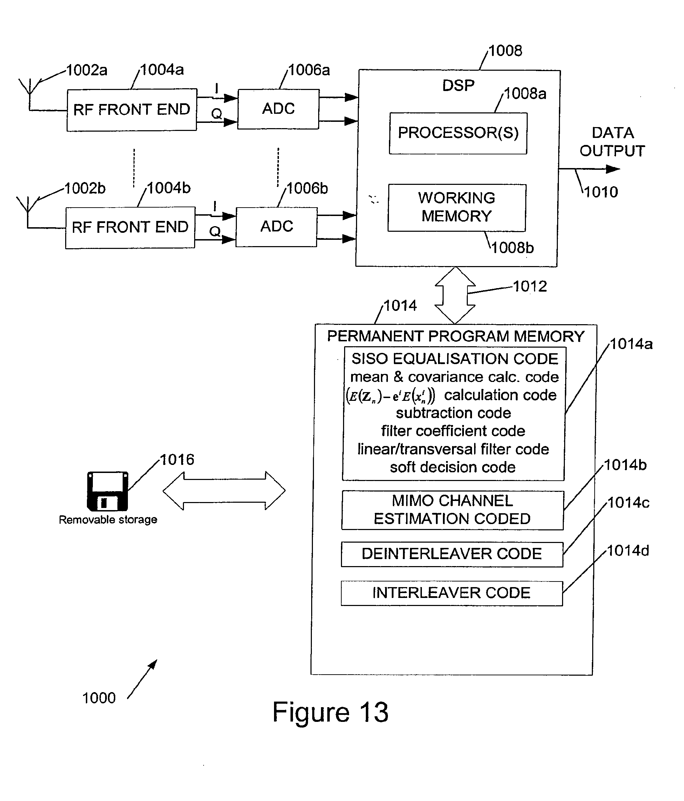

Referring now to Figure 13, this shows an embodiment of a receiver 1000 incorporating a equaliser configured to operate as described above, in particular to operate as described with reference to Figures 11 and 12. The receiver itself is configured to operate according to figure 5 is this example implementation.

Receiver 1000 comprises one or more receive antennas 1002a, b (of which two are shown in the illustrated embodiment) each coupled to a respective rf front end 1004a, b, for example similar to the rf front end of Figure 2a, and thence to a respective analogue-to-digital converter 1006a,b and to a digital signal processor (DSP) 1008. DSP 1008 will typically include one or more processors 1008a (for example, for a parallel implementation of filter 414) and some working memory 1008b. The DSP 1008 has a data output 1010 and an address, data and control bus 1012 to couple the DSP to permanent program memory 1014 such as flash RAM or ROM. Permanent program memory 1014 stores code and optionally data structures or data structure definitions for DSP 1008.

As illustrated program memory 1014 includes SISO equalisation code 1014a comprising ($E(\mathbf{Z}_n)$-$\mathbf{e}^i_E(x^i_n)$) calculation code, subtraction code, filter coefficient calculation code, linear (transversal) filter code and soft decision output code to, when running on DSP 1008, implement the corresponding functions as described in detail above. Program memory 1014 also includes MIMO channel estimation code 1014b to provide a MIMO CIR estimate H, de-interleaver code 1014c, and interleaver code 1014d. Optionally the code in permanent program memory 1014 may be provided on a carrier such as an optical or electrical signal carrier or, as illustrated in Figure 7, a floppy disk 1016. The data output 1010 from DSP 1008 is provided to further data processing elements of receiver 1000 (not shown in Figure 7) as desired. These may include a block error decoder such as a Reed-Solomon decoder (although this could be part of the turbo decoder), and a baseband data processor for implementing higher level protocols.

The receiver front-end will generally be implemented in hardware whilst the receiver processing will usually be implemented at least partially in software although one or more ASICs and/or FPGAs may also be employed. The skilled person will recognise that all the functions of the receiver could be performed in hardware and that the exact point at which the signal is digitised in a software radio will generally depend upon a cost/complexity/power consumption trade-off.

Applications of the invention have been mainly described in the context of a MIMO system with time domain coding but embodiments of the invention are also useful in frequency domain coded systems such as MIMO-OFDM (Orthogonal Frequency Division Multiplexed) systems. For example the invention may be employed with the European Hiperlan/2 or US IEEE 802.11a standards for 54Mbps wireless networks. Embodiments of the invention may also be employed in non-wireless applications such as magnetic or optical disk drive read head circuitry where, for example, multiple layers of a disk in effect act as multiple transmitters, one or more heads receiving read data influenced by "transmitted" signals from more than one layer.

The skilled person will recognise that the above-described apparatus and methods may be embodied as processor control code, for example on a carrier medium such as a disk, CD- or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring re-configurable apparatus such as reprogrammable logic gate arrays. Similarly the code may comprise code for a hardware description language such as Verilog ™ or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analog array or similar device in order to configure analog hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

**Claims**

1.   A method of transmitting a data sequence in a wireless communications system comprising:

transmitting said data sequence from a first antenna;
interleaving the data sequence;
transmitting at least a part of the interleaved sequence from a second antenna spaced apart from the first antenna, the part of the interleaved sequence transmitted simultaneously with a part of the data sequence transmitted from the first antenna.

2.   A method according to claim 1 wherein the whole interleaved sequence is transmitted simultaneously with the data sequence.

3.   A method according to claim 1 wherein the part of the interleaved sequence that is transmitted is determined by puncturing the interleaved bit sequence.

4.   A method according to any one preceding claim further comprising modulating the data sequence prior to said interleaving.

5.   A method according to any one preceding claim wherein the modulation scheme used for the data and interleaved sequences are different.

6.   A method according to any one preceding claim further comprising:

transmitting a second data sequence from a third antenna simultaneously with said transmission of the first data sequence, said third antenna being spaced apart from said first and second antennas;
interleaving the second data sequence;
transmitting at least a part of the second interleaved sequence from an antenna spaced apart from the third antenna, the part of the second interleaved sequence transmitted simultaneously with a part of the second data sequence transmitted from the third antenna.

7.   A method according to claim 6 wherein the antenna spaced apart from the third antenna is the second antenna.

8.   A method according to claim 7 wherein the parts of the interleaved sequences that are transmitted are determined by puncturing the sequences such that both parts are transmitted during said transmission of the first and second data sequences.

9.   A method according to claim 8 wherein the modulation scheme for the combined interleaved sequence has a higher number of bits per symbol.

10.   A method of receiving a data sequence in a wireless communications system in which the sequence has been transmitted from a first transmit antenna, and at least a part of an interleaved sequence of said data sequence has been transmitted from a second transmit antenna spaced apart from the first transmit antenna, the part of the interleaved sequence having been transmitted simultaneously with a part of the data sequence transmitted from the first transmit antenna; the method comprising:

receiving a signal corresponding to said data and interleaved sequences;
equalising said signal with respect to said first transmit antenna to provide an estimate for the data sequence;
equalising said signal with respect to said second transmit antenna to provide an estimate for the interleaved data sequence;
de-interleaving said estimated interleaved data sequence in order to provide two independent sources of information about the transmitted data sequence.

11. A method according to claim 10 further comprising selecting or combining the estimated data sequence and the de-interleaved estimated interleaved data sequence.

12. A method according to claim 10 or 11 wherein said first transmit antenna equalisation comprises soft iterative equalisation including receiving a de-interleaved output from the second transmit antenna equalisation, and wherein said second transmit antenna equalisation comprises soft iterative equalisation including receiving an interleaved output from the first transmit antenna equalisation.

13. A method according to claim 10 or 11 wherein the first transmit antenna equalisation comprises soft iterative equalisation to provide an estimate for the symbol sequence and demapping to provide the estimate for the data sequence, and wherein said second transmit antenna equalisation comprises soft iterative equalisation to provide an estimate for the interleaved symbol sequence and demapping to provide the estimate for the interleaved data sequence

14. A method according to claim 13 wherein the data sequence has been encoded prior to modulation; the method further comprising:

decoding the encoded estimated data sequence and/or the encoded de-interleaved version of the estimated interleaved data sequence in order to provide the estimated data sequence;
said first transmit antenna equalisation comprising soft iterative equalisation including receiving a de-interleaved output from the second transmit antenna equalisation, and wherein said second transmit antenna equalisation comprises soft iterative equalisation including receiving an interleaved output from the first transmit antenna equalisation.

15. Apparatus for transmitting a data sequence in a wireless communications system and comprising:

means for transmitting said data sequence from a first antenna;
means for interleaving the data sequence;
means for transmitting at least a part of the interleaved sequence from a second antenna spaced apart from the first antenna, the part of the interleaved sequence being transmitted simultaneously with a part of the data sequence transmitted from the first antenna.

16. An apparatus according to claim 15 wherein the whole interleaved sequence is transmitted simultaneously with the data sequence.

17. An apparatus according to claim 15 further comprising means for puncturing the interleaved bit sequence prior to said transmission.

18. An apparatus according to any one of claims 15 to 17 further comprising means for modulating the data sequence prior to said interleaving.

19. An apparatus according to any one of claims 15 to 18 wherein the modulation scheme used for the data and interleaved sequences are different.

20. An apparatus according to any one of claims 15 to 19 further comprising:

means for transmitting a second data sequence from a third antenna simultaneously with said transmission of the first data sequence, said third antenna being spaced apart from said first and second antennas;

means for interleaving the second data sequence;

means for transmitting at least a part of the second interleaved sequence from an antenna spaced apart from the third antenna, the part of the second interleaved sequence being transmitted simultaneously with a part of the second data sequence transmitted from the third antenna.

21. An apparatus according to claim 20 wherein the antenna spaced apart from the third antenna is the second antenna.

22. An apparatus according to claim 21 further comprising means for puncturing the interleaved sequences such that both parts are transmitted during said transmission of the first and second data sequences.

23. A method according to claim 21 wherein the modulation scheme for the combined interleaved sequence has a higher number of bits per symbol.

24. An apparatus for receiving a data sequence in a wireless communication system in which the sequence has been transmitted from a first transmit antenna, and at least a part of an interleaved sequence of said data sequence has been transmitted from a second transmit antenna spaced apart from the first transmit antenna, the part of the interleaved sequence having been transmitted simultaneously with a part of the data sequence transmitted from the first transmit antenna; the apparatus comprising:

means for receiving a signal corresponding to said data and interleaved sequences;

means for equalising said signal with respect to said first transmit antenna to provide an estimate for the data sequence;

means for equalising said signal with respect to said second transmit antenna to provide an estimate for the interleaved data sequence;

means for de-interleaving said estimated interleaved data sequence in order to provide two independent sources of information about the transmitted data sequence.

25. An apparatus according to claim 24 further comprising means for selecting or combining the estimated data sequence and the de-interleaved estimated interleaved data sequence.

26. An apparatus according to claim 24 or 25 wherein said first transmit antenna equalisation means comprises soft iterative equalisation means including means for receiving a de-interleaved output from the second transmit antenna equalisation means, and wherein said second transmit antenna equalisation means comprises soft iterative equalisation means including means for receiving an interleaved output from the first transmit antenna equalisation means.

27. An apparatus according to claim 24 or 25 wherein said first transmit antenna equalisation means comprises means for soft iterative equalisation to provide an estimate for the symbol sequence and demapping means to provide the estimate for the data sequence, and wherein said second transmit antenna equalisation means comprises soft iterative equalisation means to provide an estimate for the interleaved symbol sequence and demapping means to provide the estimate for the interleaved data sequence.

28. An apparatus according to claim 27 wherein the data sequence has been encoded prior to modulation; the apparatus further comprising:

means for decoding the encoded estimated data sequence and/or the encoded de-interleaved version of the estimated interleaved data sequence in order to provide the estimated data sequence;

said first transmit antenna equalisation means comprising means for soft iterative equalisation including means for receiving a de-interleaved output from the second transmit antenna equalisation, and wherein said second transmit antenna equalisation means comprises means for soft iterative equalisation including means for receiving an interleaved output from the first transmit antenna equalisation.

Figure 1

Figure 2

**TRANSMITTER**

310
312
314
$x_n^1$

data
Space-time/channel encoder
$\pi_C$
316

308
$x_n^{n_I}$

306
MIMO Channel

304
**RECEIVER**
$z_n^1$
$z_n^{n_O}$

400
MIMO SISO Equalizer

326
$L_e(c_{n,j}^1)$
$L_e(c_{n,j}^{n_I})$

$\pi_C$
324
$\pi_C^{-1}$
318

322a
$L(c_{n,j}^1)$
Space-time/channel decoder
320

$L(c_{n,j}^{n_I})$
322b

Estimated data

$\boxed{\pi_C}$ Bit interleaver       $\boxed{\pi_C^{-1}}$ Bit deinterleaver

Figure 3

300

Figure 4

EP 1 542 388 A1

MIMO SISO Equalizer

SISO Eq providing $x_n$ estimate

SISO Eq providing $\ddot{x}_n$ estimate

$z_n^1$

$z_n^{n_O}$

$\{\tilde{X}_n\}$

soft info of $x_n$

interleaver

soft info of $\ddot{x}_n$

deinterleaver

560

561

571

570

550

Figure 5

EP 1 542 388 A1

Figure 6

Figure 7

Figure 8

Figure 8a

Figure 9a

EP 1 542 388 A1

$L_p^{Dec}$    Bitwise A Posteriori Soft Info from Decoder

$L_e^{Eq}$    Bitwise Extrinsic Soft Info from Equalizer for $\{x_n\}$

$\ddot{L}_e^{Eq}$    Bitwise Extrinsic Soft Info from Equalizer for $\{\ddot{x}_n\}$

Figure 9b

EP 1 542 388 A1

Figure 10

34

Figure 11

$$L(c_{n,j}^{1}) \ldots L(c_{n,j}^{n_{\mathrm{I}}})$$

405 — $E(x_n^i) \quad \mathrm{cov}(x_n^i, x_n^i)$ DETERMINATION

406

408 — $(E(\mathbf{Z}_n) - e^i E(x_n^i))$ calculation

416 — Filter coefficients calculation

406

406

420 — $\hat{h}_t$

418 — MIMO channel estimator

410

412

Filter

$\mathbf{z}_n$

402

404

$\hat{\mathbf{x}}_n$

414

422

424 — Soft Decision

426

400

$$L_e(c_{n,j}^{1}) \ldots L_e(c_{n,j}^{n_{\mathrm{I}}})$$

## Figure 12

$$L(c_{n,j}^{1}) \ldots L(c_{n,j}^{n_{\mathrm{I}}})$$

406

406

408 — Frequency domain calculation of $(E(\mathbf{Z}_n) - e^i E(x_n^i))$

416 — Frequency domain filter coefficients calculation

$\mathbf{z}_n$

402

902 — S/P

904 — FFT

404

+

414 — Filter

906 — FFT⁻¹

908 — P/S

$\hat{\mathbf{x}}_n$

422

424 — Soft Decision

426

S/P — Serial to parallel conversion

P/S — Parallel to serial conversion

900

$$L_e(c_{n,j}^{1}) \ldots L_e(c_{n,j}^{n_{\mathrm{I}}})$$

## Figure 14

1002a 1004a 1006a 1008

RF FRONT END

I
Q

ADC

DSP

1008a

PROCESSOR(S)

DATA OUTPUT

1010

1002b 1004b 1006b

RF FRONT END

I
Q

ADC

WORKING MEMORY

1008b

1012

1014

PERMANENT PROGRAM MEMORY

1014a

SISO EQUALISATION CODE
mean & covariance calc. code
$(E(z_n) - e^i E(x_n^i))$ calculation code
subtraction code
filter coefficient code
linear/transversal filter code
soft decision code

1014b

MIMO CHANNEL ESTIMATION CODED

1014c

DEINTERLEAVER CODE

1014d

INTERLEAVER CODE

1016

Removable storage

1000

Figure 13

EP 1 542 388 A1

**European Patent Office**

**EUROPEAN SEARCH REPORT**

Application Number

EP 04 25 6754

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 912 021 A (SIEMENS AKTIENGESELLSCHAFT) 28 April 1999 (1999-04-28) * abstract * * figures 1-4 * * paragraphs [0004], [0017] - [0026] * ----- | 1-28 | H04L1/06 H04L25/00 H04L1/00 |
| X | US 2003/135799 A1 (DOETSCH MARKUS ET AL) 17 July 2003 (2003-07-17) * abstract * * figures 1-4 * * paragraphs [0042] - [0059] * ----- | 1-3,6-9, 15-17, 20-23 | |
| D,A | FOSCHINI G J ET AL: "ON LIMITS OF WIRELESS COMMUNICATIONS IN A FADING ENVIRONMENT WHEN USING MULTIPLE ANTENNAS" WIRELESS PERSONAL COMMUNICATIONS, KLUWER ACADEMIC PUBLISHERS, NL, vol. 6, no. 3, March 1998 (1998-03), pages 311-335, XP000736946 ISSN: 0929-6212 * the whole document * ----- | 1-28 | TECHNICAL FIELDS SEARCHED (Int.Cl.7) H04L |

The present search report has been drawn up for all claims

| Place of search | Date of completion of the search | Examiner |
|---|---|---|
| The Hague | 8 April 2005 | Borges, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 25 6754

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2005

| Patent document cited in search report | | Publication date | Patent family member(s) | | Publication date |
|---|---|---|---|---|---|
| EP 0912021 | A | 28-04-1999 | EP | 0912021 A2 | 28-04-1999 |
| US 2003135799 | A1 | 17-07-2003 | DE | 10034714 A1 | 07-02-2002 |
| | | | CN | 1443406 A | 17-09-2003 |
| | | | WO | 0207373 A1 | 24-01-2002 |
| | | | EP | 1302014 A1 | 16-04-2003 |
| | | | JP | 2004504764 T | 12-02-2004 |

EPO FORM P0459

For more details about this annex : see Official Journal of the European Patent Office, No. 12/82